(19) Europäisches Patentamt / European Patent Office / Office européen des brevets

(11) **EP 2 519 751 B1**

(12) **EUROPÄISCHE PATENTSCHRIFT**

(45) Veröffentlichungstag und Bekanntmachung des Hinweises auf die Patenterteilung:
**25.03.2020 Patentblatt 2020/13**

(21) Anmeldenummer: **10796073.4**

(22) Anmeldetag: **22.12.2010**

(51) Int Cl.:
**F15B 15/28** (2006.01)      **G01S 13/36** (2006.01)

(86) Internationale Anmeldenummer:
**PCT/EP2010/070603**

(87) Internationale Veröffentlichungsnummer:
**WO 2011/080200 (07.07.2011 Gazette 2011/27)**

(54) **VERFAHREN UND VORRICHTUNG ZUR ERMITTLUNG DER POSITION EINES KOLBENS EINES KOLBENZYLINDERS MIT MIKROWELLEN**

METHOD AND DEVICE FOR DETECTING THE POSITION OF A PISTON OF A CYLINDER PISTON UNIT USING MICROWAVES

MÉTHODE ET DISPOSITIF DE DÉTECTION DE POSITION D'UN PISTON D'UN VÉRIN PAR MICROONDES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **31.12.2009 DE 102009055445**

(43) Veröffentlichungstag der Anmeldung:
**07.11.2012 Patentblatt 2012/45**

(73) Patentinhaber: **BALLUFF GmbH**
**73765 Neuhausen (DE)**

(72) Erfinder:
• **BÜCHLER, Josef**
**85276 Pfaffenhofen (DE)**
• **FERICEAN, Sorin**
**71229 Leonberg (DE)**
• **DORNEICH, Albert**
**73760 Ostfildern (DE)**
• **FRITTON, Markus**
**73765 Neuhausen (DE)**

(74) Vertreter: **Hoeger, Stellrecht & Partner Patentanwälte mbB**
**Uhlandstrasse 14c**
**70182 Stuttgart (DE)**

(56) Entgegenhaltungen:
**EP-B1- 0 303 595**     **DE-A1- 19 521 771**
**DE-A1- 19 833 220**     **DE-A1-102007 020 046**
**DE-U1-202005 020 158**     **US-A- 3 264 644**
**US-A- 4 737 705**

• **ALEXANDER MEGEJ ET AL: "Integrated Microwave Sensors for Cavity-Length Measurement in Machine Engineering", IEEE TRANSACTIONS ON MICROWAVE THEORY AND TECHNIQUES, IEEE SERVICE CENTER, PISCATAWAY, NJ, US, Bd. 50, Nr. 12, 1. Dezember 2002 (2002-12-01), XP011076792, ISSN: 0018-9480 in der Anmeldung erwähnt**

**Beschreibung**

Die Erfindung betrifft ein Verfahren zur Ermittlung der Position eines Kolbens eines Kolbenzylinders, bei dem ein Mikrowellen-Sendesignal in Richtung des Kolbens emittiert wird und vom Kolben reflektierte Mikrowellen detektiert werden, wobei das Sendesignal ein moduliertes Signal umfasst, welches eine mit einer Modulationsfrequenz sinusförmig modulierte Grundfrequenz hat, und eine Auswertung der Phase zwischen Sendesignalen und Empfangssignalen durchgeführt wird.

Die Erfindung betrifft ferner eine Vorrichtung zur Messung der Position eines Kolbens eines Kolbenzylinders, umfassend eine Mikrowellen-Sendeeinrichtung und eine Mikrowellen-Empfangseinrichtung, welche mindestens teilweise an dem Kolbenzylinder angeordnet sind, wobei die Mikrowellen-Sendeeinrichtung Sendesignale in Richtung des Kolbens emittiert und die Mikrowellen-Empfangseinrichtung Empfangssignale empfängt und detektiert, und eine Auswertungeinrichtung.

Aus der DE 20 2005 020 158 U1 ist ein Messsystem zur Messung des Abstands bis zu einem Messmedium bekannt, umfassend einen ein erstes Ende und ein zweites Ende aufweisenden Hohlleiter zum Führen von elektromagnetischen Wellen bis zu dem Messmedium, einen am ersten Ende anbringbaren Sender zum Aussenden einer modulierten elektromagnetischen Welle in den Hohlleiter, einen am ersten Ende anbringbaren Empfänger zum Empfangen von aus dem Hohlleiter kommenden elektromagnetischen Wellen, und eine mit dem Empfänger verbundene Auswerteeinheit zum Ermitteln des Abstand bis zu dem Messmedium. In dem Hohlleiter ist eine Störstelle vorgesehen, die einen definierten Anteil der im Hohlleiter geführten elektromagnetischen Welle zu dem Empfänger zurückreflektiert und die Auswerteeinheit ist dafür ausgebildet, den Abstand bis zu dem Messmedium durch Vergleich der von der Störstelle reflektierten elektromagnetischen Welle und der vom Messmedium reflektierten elektromagnetischen Welle zu ermitteln.

Die DE 195 21 771 A1 offenbart ein FMCW-Abstandsmessverfahren, bei dem ein Wellenzug einer Trägerfrequenz mit einer Zeitfunktion moduliert und in ein Sendesignal und ein dazu in deterministischer Phasenbeziehung stehendes Referenzsignal aufgeteilt wird, das Sendesignal auf eine zu vermessende Übertragungsstrecke gegeben und das Referenzsignal einer phasendifferenz-bildenden Anordnung zugeführt wird, das in der Übertragungsstrecke reflektierte Signal mit einer Laufzeit verzögert als Empfangssignal ebenfalls der phasendifferenz-bildenden Anordnung zugeführt wird, die phasendifferenzbildende Anordnung die zeitliche Differenzfunktion der Phasen zwischen Referenz- und Empfangssignal bildet, und die Phasen-Differenzfunktion bezüglich eines der Trägerfrequenz zugeordneten Gleichanteils und eines der Modulations-Zeitfunktion zugeordneten Wechselanteils getrennt ausgewertet wird, und die dem Abstand proportionale Laufzeit durch kombinierte Auswertung beider Phasendifferenz-Informationen ermittelt wird.

Aus der DE 10 2007 020 046 A1 ist ein Verfahren zur Bestimmung eines Abstands bekannt, bei dem eine Leitungsstruktur mit Reflexionskörper bereitgestellt wird, welche einen Einspeisungsblock mit einem Einspeisungsbereich aufweist, der einen HF-Transceiver über einen Wellenleiter mit dielektrischem Haltesystem mit der Kopplungssonde verbindet, und der Reflexionskörper weist eine Grundplatte mit aufgesetztem Kragen zur Ausbildung eines becherförmigen Elements auf. Der Abstand zwischen dem von der Kopplungssonde definierten Einspeisepunkt und dem Reflexionskörper wird gemessen, wobei mindestens zwei Sendesignale als elektromagnetische Wellen mit unterschiedlicher Frequenz über die Koppelsonde eingekoppelt, vorzugsweise ausgestrahlt und empfangen, werden.

Aus der DE 198 33 220 A1 ist eine Abstandsmessvorrichtung mit einer Sensoreinrichtung und einer Auswerteelektronik bekannt, bei der die Sensoreinrichtung zumindest eine Koppelsonde zur Einspeisung eines Sendesignals in eine Leitungsstruktur aufweist.

Aus der US 4,737,705 ist ein linearer Positionssensor bekannt, welcher einen koaxialen Resonator-Hohlraum verwendet.

Aus der EP 0 303 595 B1 ist eine Vorrichtung zur Detektion der linearen Position eines Kolbens und einer Kolbenstange bekannt, bei der Mikrowellen reflektiert werden und transversale Moden erzeugt werden.

In der Doktorarbeit "Integrated Microwaves Sensors for Cavity-Length Measurement in Machine Engineering" von Alexander Megej, Schaker Verlag, Aachen 2002 sind Mikrowellensensoren beschrieben, welche es ermöglichen, die Länge eines zylindrischen Hohlraums zu bestimmen.

Der Erfindung liegt die Aufgabe zugrunde, ein Verfahren der eingangs genannten Art bereitzustellen, welches eine hohe Messgenauigkeit bei hoher Messgeschwindigkeit und minimalinvasivem Eingriff in den Kolbenzylinder erlaubt.

Diese Aufgabe wird bei dem eingangs genannten Verfahren erfindungsgemäß dadurch gelöst, dass eine Phasenbestimmung bei dem Grundband und eine simultane Phasenbestimmung an mindestens einem Seitenband durchgeführt wird, wobei die Phasenbestimmung am Grundband für eine Feinbestimmung der Kolbenposition genutzt wird und die Phasenbestimmung an dem mindestens einen Seitenband für die Grobbestimmung der Kolbenposition genutzt wird, und dass an Empfangssignalen und Auswertungs-Sendesignalen eine Bandpassfilterung bezüglich der Grundfrequenz oder einer Zwischenfrequenz durchgeführt wird, und eine Bandpassfilterung bezüglich der Modulationsfrequenz erfolgt.

Bei der erfindungsgemäßen Lösung ist das Sendesignal durch das modulierte Signal gebildet oder enthält ein solches moduliertes Signal. Durch die sinusförmige Modulierung weist das Frequenzspektrum des Sendesignals ein Grundband mit der Grundfrequenz und Seitenbänder mit ganzzahligen Vielfachen der Modulationsfrequenz auf. Dadurch ist es möglich, zur Bestimmung der Kolbenposition sowohl das Grundband als auch mindestens ein Seitenband zu nutzen. Mit der erfindungsgemäßen Lösung ist eine simultane Phasenbestimmung bzw. Laufzeitbestimmung im Grundband (bei der Grundfrequenz) sowie bei einem oder mehreren Seitenbändern (bei der Modulationsfrequenz oder einem ganzzahligen Vielfachen davon) möglich.

Dadurch ist es möglich, die Phasendifferenz zwischen Sendesignalen und Empfangssignalen auf unterschiedliche Art und Weise zu bestimmen. Insbesondere lässt sich eine Feinbestimmung durchführen, indem eine Auswertung im Grundband erfolgt, und es lässt sich eine Grobbestimmung durchführen, indem eine Auswertung in mindestens einem Seitenband erfolgt.

Im Grundband stellt die Grundfrequenz den Maßstab für die Bestimmung bereit. In einem Seitenband stellt die Modulationsfrequenz diesen Maßstab bereit. Ein Eindeutigkeitsbereich für die Messung ist umso größer, je kleiner die entsprechende Frequenz ist. Die Modulationsfrequenz ist kleiner ist als die Grundfrequenz, so dass der Eindeutigkeitsbereich im Seitenband größer ist als im Grundband.

Es wird eine Phasenbestimmung bei dem Grundband durchgeführt. Die entsprechenden Informationen lassen sich zur Positionsbestimmung nutzen und insbesondere wird die Phasenbestimmung am Grundband für eine Feinbestimmung der Kolbenposition genutzt.

Es ist dazu vorgesehen, dass an Empfangssignalen und Auswertungs-Sendesignalen eine Bandpassfilterung bezüglich der Grundfrequenz oder einer Zwischenfrequenz (wenn Sendesignale die Zwischenfrequenz enthalten) durchgeführt wird. Dadurch lassen sich die entsprechenden Signale für die Grundfrequenz ausfiltern und die Phasendifferenz kann bestimmt werden.

Es erfolgt eine simultane Phasenbestimmung an mindestens einem Seitenband. Dadurch ergeben sich zusätzliche Informationen bzw. es lässt sich die Kolbenposition absolut ermitteln.

Insbesondere wird die Phasenbestimmung an dem mindestens einen Seitenband für die Grobbestimmung der Kolbenposition genutzt. Über Grobbestimmung der Kolbenposition lässt sich dann über Bestimmung der Phasendifferenz im Grundband die endgültige Positionsbestimmung durchführen. Die Abstandsmessung erfolgt nicht in zwei zeitlich nacheinander ausgeführten Schritten, sondern durch simultane Phasenbestimmungen an dem mindestens einen Seitenband und dem Grundband. Dadurch lässt sich eine hochgenaue absolute Abstandsmessung realisieren.

Insbesondere hat die Phase des modulierten Signals die Gestalt

$$\varphi_T = 2\pi\, f_0 t + \eta\, \sin\left(2\pi f_m t - \varphi_{m0}\right),$$

wobei $f_0$ die Grundfrequenz ist, $f_m$ die Modulationsfrequenz ist, $\eta$ ein Modulationsindex ist und $\varphi_{m0}$ eine Konstante ist.

Entsprechend hat die Phase des Empfangssignals die Gestalt

$$\varphi_R = 2\pi\, f_0\left(t - \sigma\right) + \eta\, \sin\left(2\pi\, f_m\left(t - \sigma\right) - \varphi_{m0}\right).$$

Der Laufzeitunterschied $\sigma$ ist dabei messbar. Wenn $\sigma$ bekannt ist, dann ist auch die Kolbenposition grundsätzlich bekannt. Es gilt $\sigma = 2l/c$, wobei $l$ die zwischen einer Antenne und dem Kolben zurückgelegte Strecke eines Ausbreitungsmodus und damit die Kolbenposition ist. $c$ ist die Phasengeschwindigkeit dieses Ausbreitungsmodus im Zylinderraum vor dem Kolben. Wie aus obiger Formel ersichtlich ist, ist grundsätzlich eine Sigmabestimmung sowohl am Grundband als auch an mindestens einem Seitenband möglich.

Insbesondere liegt die Grundfrequenz im Gigahertzbereich und die Modulationsfrequenz liegt im Megahertzbereich.

Es kann auch vorgesehen sein, dass Sendesignale oder Auswertungs-Sendesignale mit Zwischenfrequenzsignalen gemischt werden oder sind. Dadurch lassen sich Signale, welche zur Auswertung herangezogen werden, auf die Zwischenfrequenz herabsetzen, wobei die Zwischenfrequenz vorzugsweise dann so gewählt wird, dass bei der Zwischenfrequenz entsprechende elektronische Komponenten zur Verfügung stehen. Es ist auch möglich, Sendesignale mit einer Zwischenfrequenz zu versehen. Dies kann unter Umständen die Auswertung erleichtern.

Es ist dann insbesondere vorgesehen, dass Zwischenfrequenzsignale mit der Modulationsfrequenz moduliert sind. Wenn diese modulierten Zwischenfrequenzsignale mit Signalen der Grundfrequenz gemischt werden, ergeben sich Sendesignale, welche mit der Modulationsfrequenz frequenzmoduliert sind auf Basis der Grundfrequenz.

Bei einer Ausführungsform werden Auswertungs-Sendesignale und Auswertungs-Empfangssignale jeweils mit Zwischenfrequenzsignalen gemischt. Dadurch ist es möglich, die Phasenbestimmung in einem Frequenzbereich der Zwischenfrequenzsignale durchzuführen. Dadurch ist es beispielsweise möglich, kostengünstig zur Verfügung stehende Bandpassfilter, welche im Bereich der Zwischenfrequenz filtern, zu verwenden.

Günstig ist es, wenn eine Zwischenfrequenz kleiner ist als die Grundfrequenz, um die Auswertung zu erleichtern.

Insbesondere liegt die Grundfrequenz im Gigahertzbereich und die Zwischenfrequenz liegt im Megahertzbereich. Die Zwischenfrequenz ist eine feste unveränderliche Frequenz.

Es ist ferner günstig, wenn die Zwischenfrequenz zwischen der Modulationsfrequenz und der Grundfrequenz liegt.

Es werden dann die gefilterten Signale gemischt und/oder es wird die Phasendifferenz zwischen den gefilterten Signalen bestimmt. Aus der Phasendifferenz, welche laufzeitabhängig ist, kann wiederum die Kolbenposition bestimmt werden.

Bei einer Ausführungsform werden Auswertungs-Sendesignale und Empfangssignale gemischt. Dadurch ist es möglich, die Bestimmung an mindestens einem Seitenband durchzuführen.

Insbesondere werden Mischungssignale bezüglich einer Hauptfrequenz des mindestens einen Seitenbands gefiltert. Es existieren mehrere Seitenbänder mit jeweiligen Hauptfrequenzen. Die Hauptfrequenzen sind ganzzahlige Vielfache der Modulationsfrequenz. Die Signalstärke eines Seitenbands hängt vom Modulationsindex ab. Der Modulationsindex kann dann so gewählt werden, dass einem bestimmten n-ten Seitenband (mit n > 1) die größte Signalstärke zugeordnet wird. Durch Filterung kann dieses n-te Seitenband, welches die größte Signalstärke hat, zur weiteren Auswertung verwendet werden. Als Frequenzabstand zur Grundfrequenz $f_0$ ergibt sich $n \cdot f_m$ mit der Modulationsfrequenz $f_m$. Dies ermöglicht eine einfache Filterung; beispielsweise kann die Flankensteilheit eines Filters geringer sein usw.

Weiterhin ist es vorgesehen, dass Signale nach der Filterung mit weiteren Signalen gemischt werden, wobei diese weiteren Signale die Frequenzmodulation mit der Modulationsfrequenz erzeugen. Dadurch lässt sich ein Signal erzeugen, welches durch das Seitenband bestimmt ist.

Bei einer Ausführungsform ist es vorgesehen, dass Sendesignale erzeugt werden durch Mischung von Signalen mit der Grundfrequenz und Zwischenfrequenzsignalen.

Insbesondere sind dabei die Zwischenfrequenzsignale selber mit der Modulationsfrequenz moduliert. Dadurch lässt sich ein Sendesignal erzeugen, welches entsprechend frequenzmoduliert ist mit der Modulationsfrequenz auf Basis der Grundfrequenz. Bei dem entsprechenden Verfahren lässt sich die Auswertung unter Umständen vereinfachen.

Insbesondere werden Auswertungs-Empfangssignale durch Mischen von Empfangssignalen und Signalen mit der Grundfrequenz erzeugt. Dadurch lassen sich auf einfache Weise Auswertungs-Empfangssignale erzeugen, deren Frequenz im Bereich der Zwischenfrequenz liegt. Dadurch ergibt sich wiederum eine vereinfachte Bandpassfilterung.

Bezüglich der Bestimmung an dem mindestens einen Seitenband ist es vorteilhaft, wenn Auswertungs-Empfangssignale und modulierte Zwischenfrequenzsignale gemischt werden und die entstehenden Signale nach Filterung mit Signalen, welche die Modulation mit der Modulationsfrequenz bewirken, gemischt werden. Dadurch lässt sich eine Grobbestimmung der Position erreichen.

Vorteilhaft ist es, wenn Sendesignale bei mindestens zwei unterschiedlichen Grundfrequenzen emittiert werden und Phasenbestimmungen jeweils bei diesen mindestens zwei unterschiedlichen Grundfrequenzen durchgeführt werden. Dadurch ist es möglich, wenn eine entsprechende Auswertung durchgeführt wird, bei a priori unbekannter Dielektrizitätszahl diese zu berechnen bzw. die Kolbenposition mit Formeln zu bestimmen, in welche die Dielektrizitätszahl nicht eingeht. Dadurch wiederum ist es möglich, Änderungen der Dielektrizitätszahl zu überwachen. Solche Änderungen können beispielsweise bei Hydrauliköl durch Temperatureinfluss und Druckeinfluss und Alterung und Verschmutzungsprozesse hervorgerufen werden. Es ist dabei grundsätzlich möglich, dass die Sendesignale bei den mindestens zwei unterschiedlichen Grundfrequenzen nicht frequenzmoduliert sind. Auch eine Frequenzmodulierung ist möglich. Vorteilhafterweise sind dann die Modulationsfrequenzen unterschiedlich, um eine einfache Auswertung zu erreichen. Es ist beispielsweise vorgesehen, dass Sendesignale bei mindestens drei unterschiedlichen Grundfrequenzen emittiert werden und die Phasenbestimmungen (Laufzeitbestimmungen) bei diesen drei Grundfrequenzen durchgeführt werden. Dadurch ist es möglich, bei a priori unbekannter Dielektrizitätszahl und/oder unbekanntem Innendurchmesser eines Zylinderraums diese zu berechnen bzw. die Kolbenposition aus Formeln zu ermitteln, in welche die Dielektrizitätszahl und/oder der Innendurchmesser nicht eingeht.

Es kann vorgesehen sein, dass die Dielektrizitätszahl mittels Phasenbestimmungen bei mindestens zwei unterschiedlichen Grundfrequenzen ermittelt wird. Wenn eine solche Phasenbestimmung bei mindestens zwei unterschiedlichen Grundfrequenzen erfolgt, dann kann aus den entsprechenden Gleichungen die Hohlraumlänge (welche durch die Kolbenposition bestimmt ist) eliminiert werden und daraus lässt sich dann direkt die Dielektrizitätszahl bestimmen. Beispielsweise werden die Frequenzen so gewählt, dass die Phase Null (modulo $2\pi$) ist. Beispielsweise ist dann die zweite Frequenz so gewählt, dass sich die Phase bei dieser zweiten Frequenz um $2\pi$ unterscheidet. Dadurch lässt sich auf einfache Weise die Dielektrizitätszahl berechnen.

Der Erfindung liegt ferner die Aufgabe zugrunde, eine Vorrichtung der eingangs genannten Art bereitzustellen, welche eine hohe Messgenauigkeit bei hoher Messgeschwindigkeit und bei minimalinvasivem Eingriff in den Kolbenzylinder erlaubt.

Diese Aufgabe wird bei der eingangs genannten Vorrichtung erfindungsgemäß dadurch gelöst, dass die Mikrowellen-Sendeeinrichtung frequenzmodulierte Signale erzeugt, welche eine mit einer Modulationsfrequenz sinusförmig modulierte Grundfrequenz haben, dass eine erste Einheit vorgesehen ist, welche eine Phasenbestimmung der Phase zwischen Sendesignalen und Empfangssignalen an dem Grundband durchführt, dass eine zweite Einheit vorgesehen ist, welche eine simultane Phasenbestimmung an mindestens einem Seitenband durchführt, dass die erste Einheit eine Filtereinrichtung umfasst, welche eine Filterung bezüglich der Grundfrequenz oder einer Zwischenfrequenz durchführt, dass die zweite Einheit eine Filtereinrichtung umfasst, welche eine Filterung bezüglich der Modulationsfrequenz durchführt, und dass eine Grobbestimmung der Kolbenposition durch die Phasenbestimmung an dem mindestens einen Seitenband und eine Feinbestimmung der Kolbenposition durch die Phasenbestimmung an dem Grundband erfolgt.

Diese Vorrichtung weist die bereits im Zusammenhang mit dem erfindungsgemäßen Verfahren beschriebenen Vorteile auf.

Durch die simultan durchgeführten Phasenbestimmungen erhält man eine hohe Dynamik, weil beide Messwertermittlungsarten (Feinbestimmungs-Messwerte und Grobbestimmungs-Messwerte) gleichzeitig zur Verfügung stehen. Die permanente Verfügbarkeit dieser Messwerte ermöglicht eine echte Absolutmessung mit hoher Zuverlässigkeit; Fehler, die durch eine Intervallverfolgung entstehen können, sind ausgeschlossen.

Es ist eine erste Einheit vorgesehen, welche eine Phasenbestimmung der Phase zwischen Sendesignalen und Empfangssignalen an dem Grundband durchführt, und es ist eine zweite Einheit vorgesehen, welche eine Phasenbestimmung an mindestens einem Seitenband durchführt. Durch entsprechende Signalmischung kann an der ersten Einheit die Phasenbestimmung im Grundband und an der zweiten Einheit die Phasenbestimmung an mindestens einem Seitenband durchgeführt werden.

Die erste Einheit umfasst eine Filtereinrichtung, welche eine Filterung und insbesondere Bandpassfilterung bezüglich der Grundfrequenz oder einer Zwischenfrequenz durchführt. Dadurch lässt sich die Phasenbestimmung im Grundband durchführen.

Aus dem gleichen Grund ist es vorgesehen, dass die zweite Einheit eine Filtereinrichtung umfasst, welche eine Filterung bezüglich der Modulationsfrequenz durchführt. Dadurch lässt sich die Phasenbestimmung in einem Seitenband durchführen. Durch Bandpassfilterung ergibt sich ein Signal, welches durch entsprechende Mischung mit einem die Modulation mit der Modulationsfrequenz erzeugenden Signal zur Phasenbestimmung verwendet werden kann.

Bei einer Ausführungsform weist die erste Einheit einen Mischer auf, welcher gefilterte Sendesignale und Empfangssignale mischt und/oder einen Phasendetektor zur Phasenbestimmung aufweist. Dadurch lässt sich auf einfache Weise die Phasendifferenz als Laufzeit zwischen Sendesignalen und Empfangssignalen bestimmen und dadurch wiederum lässt sich die Kolbenposition ermitteln.

Günstig ist es, wenn die zweite Einheit einen ersten Mischer umfasst, an welchem Empfangssignale oder Auswertungs-Empfangssignale und Sendesignale oder Auswertungs-Sendesignale gemischt werden. Es lässt sich dadurch ein Signal mit Anteilen von Frequenzen von Seitenbändern erzeugen.

Ferner günstig ist es, wenn die zweite Einheit einen zweiten Mischer umfasst, welcher Signale des ersten Mischers nach Filterung mit die Frequenzmodulation erzeugenden Signalen mischt. Dadurch lässt sich die Phase bestimmen.

Aus dem gleichen Grund ist es günstig, wenn die zweite Einheit einen Phasendetektor umfasst, welcher die Phasendifferenz von Mischungssignalen und von die Modulation erzeugenden Signalen ermittelt.

Bei einer Ausführungsform ist eine Mischungseinrichtung vorgesehen, welche Signale mit einer Ausgangsfrequenz, welche die Differenz zwischen der Grundfrequenz ($f_0$) und einer Zwischenfrequenz ($f_i$) ist, mit mit der Modulationsfrequenz ($f_m$) modulierten Zwischenfrequenzsignalen mischt, wobei die entstehenden Mischungssignale Sendesignale sind, und welche Empfangssignale mit den Signalen mit der Ausgangsfrequenz ($f_0$- $f_i$) mischt. Dadurch lässt sich eine Phasenbestimmung auf dem Niveau einer festen Zwischenfrequenz durchführen. Es können unter Umständen kostengünstigere bzw. schnellere elektronische Komponenten, die auf der Zwischenfrequenz arbeiten, eingesetzt werden. Die Signale mit der Ausgangsfrequenz lassen sich durch einen Oszillator herstellen, welcher nicht an andere Oszillatoren (zur Modulation) gekoppelt ist. Dadurch kann die Ausgangsfrequenz und dadurch auch die Grundfrequenz leicht variiert werden, um eine Anpassung an einen bestimmten zu vermessenden Kolbenzylinder durchzuführen.

Bei einer Ausführungsform ist eine Mischungseinrichtung vorgesehen, welche Signale mit der Grundfrequenz mit mit der Modulationsfrequenz modulierten Zwischenfrequenzsignalen mischt, wobei die entstehenden Mischungssignale Sendesignale sind, und welche Empfangssignale mit den Signalen mit der Grundfrequenz mischt. Es erfolgt bei dieser Ausführungsform bereits eine Emission von Sendesignalen, die die Zwischenfrequenz enthalten.

Bei einer Ausführungsform ist es vorgesehen, dass die Mikrowellen-Sendeeinrichtung Sendesignale mindestens einer ersten Grundfrequenz und einer zweiten Grundfrequenz sendet, wobei sich die erste Grundfrequenz von der zweiten Grundfrequenz unterscheidet. Dadurch ist es möglich, die Dielektrizitätszahl unabhängig von der Position des Kolbens zu bestimmen und zu überwachen. Umgekehrt ist es möglich, die Kolbenposition zu bestimmen, auch wenn a priori die Dielektrizitätszahl eines Mediums in einem Zylinderraum nicht bekannt ist. Grundsätzlich kann sich die Dielektrizitätszahl mit der Zeit beispielsweise aufgrund von Temperatureinfluss und Druckeinfluss und Alterungsprozessen des Mediums bzw. aufgrund von Verschmutzungen ändern. Bei der erfindungsgemäßen Vorrichtung kann dies erfasst und kompensiert werden.

Beispielsweise sendet die Mikrowellen-Sendeeinrichtung Sendesignale einer ersten Grundfrequenz, einer zweiten Grundfrequenz und einer dritten Grundfrequenz, wobei sich diese drei Grundfrequenzen voneinander unterscheiden. Dadurch ist es möglich, die Kolbenposition zu ermitteln, auch wenn a priori die Dielektrizitätszahl eines Mediums im Zylinderraum und/oder ein Innendurchmesser des Zylinders nicht bekannt sind.

Es ist dabei bei der genannten Ausführungsform grundsätzlich möglich, dass die Sendesignale der Mikrowellen-Sendeeinrichtung nicht frequenzmoduliert sind oder dass sie frequenzmoduliert sind.

Der Kolbenzylinder ist insbesondere ein Hydraulikzylinder oder ein Pneumatikzylinder.

Bei einer Ausführungsform ist eine Antenne (als Teil der Mikrowellen-Sendeeinrichtung) an einem ersten Bereich eines Zylinderraums angeordnet, welcher einen kleineren Durchmesser als ein zweiter Bereich aufweist, in welchem sich der Kolben bewegt. Dadurch lässt sich ein Anschlagen des Kolbens an der Antenne auf einfache Weise verhindern. Ferner lässt sich die Beeinflussung der Hohlraummoden aufgrund der in dem Zylinderraum angeordneten Antenne gering halten.

Eine dem Kolben zugewandte Seite der Antenne ist dann vorzugsweise bezüglich eines Übergangs zwischen dem ersten Bereich und dem zweiten Bereich zurückgesetzt. Der Kolben kann dann nicht an die Antenne anstoßen. Die Antenne ist von dem Medium in dem Zylinderraum umgeben. Es ist eine optimierte Abstrahlung in den Zylinderraum erreicht.

Günstig ist es, wenn eine Antenne in einem Zylinderraum so angeordnet ist, dass sie zusammen mit einem Aufnahmeraum für die Antenne eine Fortsetzung eines Koaxialkabels bezüglich des Wellenwiderstands insbesondere 50 $\Omega$ ist. Dadurch werden Reflexionen an einem Antennenfußpunkt verringert.

An der erfindungsgemäßen Vorrichtung lässt sich das erfindungsgemäße Verfahren durchführen bzw. dieses wird an dieser durchgeführt.

Die nachfolgende Beschreibung bevorzugter Ausführungsformen dient im Zusammenhang mit den Zeichnungen der näheren Erläuterung der Erfindung. Es zeigen:

Figur 1    eine schematische Darstellung eines Kolbenzylinders mit einer Vorrichtung zur Messung der Position eines Kolbens des Kolbenzylinders;

Figur 2    eine Teildarstellung einer Variante eines Kolbenzylinders mit einer Antenne;

Figur 3    schematisch einen zeitlichen Verlauf der Frequenzen eines Sendesignals T und eines Empfangssignals R mit Laufzeitunterschied $\sigma$ (Figur 3(a)) und des Frequenzspektrums (Figur 3(b));

Figur 4    eine schematische Darstellung eines ersten Ausführungsbeispiels einer erfindungsgemäßen Vorrichtung;

Figur 5    eine schematische Darstellung eines zweiten Ausführungsbeispiels;

Figur 6    eine schematische Darstellung eines dritten Ausführungsbeispiels; und

Figur 7    eine schematische Darstellung eines vierten Ausführungsbeispiels.

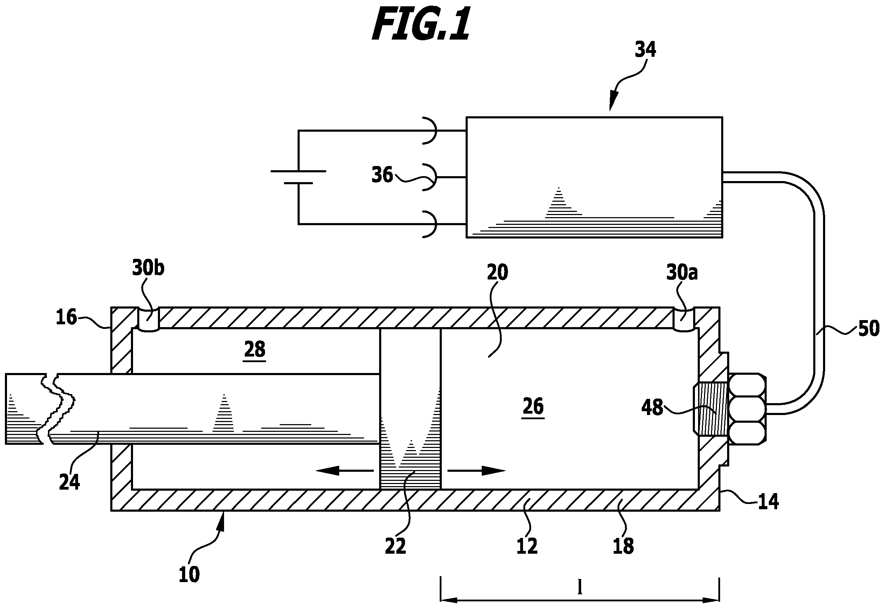

Ein Ausführungsbeispiel eines Kolbenzylinders, welcher schematisch in Figur 1 gezeigt und dort mit 10 bezeichnet ist, weist einen Zylinder 12 mit einer ersten Stirnseite 14 und einer gegenüberliegenden zweiten Stirnseite 16 auf. Zwischen der ersten Stirnseite 14, der zweiten Stirnseite 16 und einer Wandung 18 des Zylinders 12 ist ein Zylinderraum 20 gebildet.

In dem Zylinderraum 20 ist ein Kolben 22 positioniert, welcher linear hin und her verschieblich ist.

Bei dem gezeigten Ausführungsbeispiel ist an dem Kolben 22 eine Kolbenstange 24 angeordnet. Der Zylinderraum 20 ist dabei in einen ersten Unterraum 26 und einen zweiten Unterraum 28 unterteilt. Der erste Unterraum 26 hat eine hohlzylindrische Gestalt und der zweite Unterraum 28 hat eine ringzylindrische Gestalt, da die Kolbenstange 24 den zweiten Unterraum 28 durchdringt.

In dem ersten Unterraum 26 und dem zweiten Unterraum 28 kann ein Medium angeordnet sein. Bei einem Hydraulikzylinder ist das Medium ein Hydrauliköl. Bei einem Pneumatikzylinder ist das Medium Luft.

Entsprechend sind an dem Zylinder 12 eine erste Einlass-/Auslass-Kombination 30a und eine zweite Einlass-/Auslass-Kombination 30b für das Medium den jeweiligen Unterräumen 26, 28 zugeordnet angeordnet. Es ist dabei eine Kombination von Einlässen und Auslässen jeweils dem ersten Unterraum 26 und dem zweiten Unterraum 28 zugeordnet.

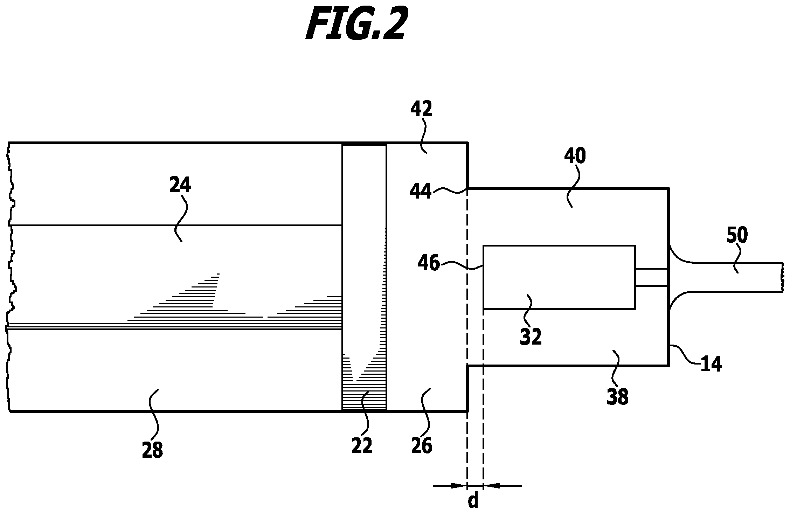

An der ersten Stirnseite 14 sitzt eine Antenne 32 (Figur 2). Diese Antenne ist auf den Kolben 22 ausgerichtet. Mikrowellenstrahlung wird von der Antenne 32 in Richtung des Kolbens 22 emittiert, von dort reflektiert und die Antenne 32 kann die reflektierte Strahlung aufnehmen und weiterleiten.

Dem Kolbenzylinder 10 ist eine Vorrichtung 34 zur Messung der Position des Kolbens 22 zugeordnet. An einem oder mehreren Anschlüssen 36 stellt die Vorrichtung 34 Ausgabesignale bereit, welche die Position des Kolbens 22 und insbesondere dessen Abstand I zu der ersten Stirnseite 14 charakterisieren.

Die Vorrichtung 34 kann dabei getrennt von dem Kolbenzylinder 10 sein oder der Kolbenzylinder 10 kann Teil dieser Vorrichtung 34 sein.

Es ist dabei grundsätzlich möglich, dass alternativ oder zusätzlich dem zweiten Unterraum 28 ebenfalls eine Antenne zugeordnet ist, welche Mikrowellenstrahlung in Richtung derjenigen Seite des Kolbens 22 emittiert, welche der zweiten Stirnseite 16 zugewandt ist.

Ein Kolbenzylinder mit einem Gelenkauge oder ein Standardzylinder weist beispielsweise einen hohlzylindrischen ersten Unterraum 26 und einen ringzylindrischen zweiten Unterraum 28 wie in Figur 1 gezeigt auf. Ein Gleichlaufzylinder weist zwei ringzylindrische Unterräume auf.

Bei einer Ausführungsform eines Kolbenzylinders weist der Zylinder 12 begrenzt durch die Stirnseite 14 einen Bereich auf, welcher als Aufnahmeraum 38 für die Antenne 32 genutzt wird. Dieser Aufnahmeraum 38 bildet einen ersten Bereich 40 des entsprechenden Unterraums (in dem Beispiel gemäß Figur 2 des ersten Unterraums 26). Auf den ersten Bereich 40 folgt ein zweiter Bereich 42, in welchem sich der Kolben 22 bewegt. Der Durchmesser des zweiten Bereichs 42 ist größer als der des ersten Bereichs 40. Ein Übergang 44 zwischen dem zweiten Bereich 42 und dem ersten Bereich 40 bildet eine Stirnseite des Zylinderraums 20 für die Kolbenbewegung.

Eine Vorderseite 46 der Antenne 32, welche dem Kolben 22 zugewandt ist, ist gegenüber diesem Übergang 44 leicht zurückgesetzt. Eine Größenordnung des entsprechenden Abstands d zwischen dieser Vorderseite 46 und dem Übergang 44 (senkrecht zu einer Bewegungsrichtung des Kolbens 22) liegt beispielsweise in der Größenordnung von 1 mm. Grundsätzlich ist dieser Abstand d sehr viel kleiner als die Wellenlänge bei der Grundfrequenz.

Die Antenne 32 ist an der entsprechenden ersten Stirnseite 14 des Kolbenzylinders 10 fixiert. Sie ist beispielsweise über eine entsprechende Halterung eingeschraubt. Der Antenne 32 ist dabei ein Richtkoppler 48 (Figur 1) zugeordnet. Dieser Richtkoppler 48 ist hinter der Antenne 32 angeordnet und beispielsweise mittels eines Frästeils ausgebildet.

Die Antenne 32 ist mit der restlichen Vorrichtung 34 über eine Koaxialkabeleinrichtung 50 (mit je einem Koaxialkabel für den Sendezweig und den Empfangszweig) angeschlossen. Es ist dabei vorzugsweise vorgesehen, dass die Antenne 32 so ausgebildet ist, dass sie zusammen mit dem Aufnahmeraum 38 eine Fortsetzung (bezüglich des Wellenwiderstands) eines Koaxialkabels (mit 50 $\Omega$-Widerstand) darstellt. Dadurch lassen sich Reflexionen an einem Antennenfußpunkt verringern.

Bei der erfindungsgemäßen Lösung ist das Sendesignal $s_T$ durch ein frequenzmoduliertes Signal mit einer Grundfrequenz $f_0$ und einer Modulationsfrequenz $f_m$ gebildet oder enthält (mindestens) solch ein Signal:

$$s_T(t) = A_T(t) \cos \varphi_T(t) \qquad (1)$$

mit der Phase

$$\varphi_T(t) = 2\pi f_0\, t + \eta \sin(2\pi f_m t - \varphi_{m0}) \qquad (2).$$

Dabei ist $\varphi_{m0}$ eine Konstante. $\eta$ ist ein Modulationsindex mit

$$\eta = \frac{\Delta f}{2 f_m} \qquad (3).$$

$\Delta f$ ist dabei der gesamte Frequenzhub bei der Modulation.

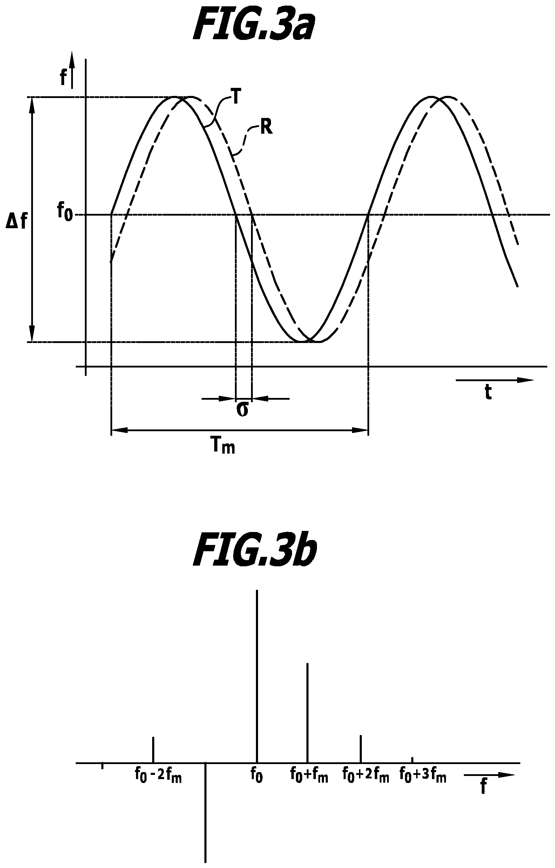

Der Frequenzverlauf für dieses Signal ist in Figur 3(a) schematisch gezeigt.

Ein zurückreflektiertes Signal (Empfangssignal) hat die Gestalt

$$s_R(t) = A_R(t) \cos \varphi_R(t) \qquad (4)$$

mit der Phase

$$\varphi_R(t) = 2\pi f_0 (t-\sigma) + \eta \sin\left(2\pi f_m (t-\sigma) - \varphi_{m0}\right) \qquad (5)$$

Der entsprechende Frequenzverlauf ist ebenfalls schematisch in Figur 3(a) gezeigt.

Das Sendesignal und das Empfangssignal weisen das gleiche Frequenzspektrum auf. Es existiert ein Grundband mit der Frequenz $f_0$ und Seitenbänder mit den Frequenzen $\pm$ n $\cdot$ $f_m$, wobei n eine natürliche Zahl ist.

Die Signale $s_T$ (und entsprechend $s_R$) können nach Besselfunktion entwickelt werden. Es ergibt sich dann beispielsweise:

$$s_T(t)/A_T = J_0(\eta) \cos\left(2\pi f_0 t - \varphi_{T0}\right)$$
$$+ J_1(\eta) \cos\left(2\pi (f_0 + f_m) t\right) - J_1(\eta) \cos\left(2\pi (f_0 - f_m) t\right) + ... \qquad (6).$$

Wenn Sendesignal und Empfangssignal gemischt werden, dann ergibt sich:

$$s_M(t) = s_T(t) \otimes s_R(t)$$
$$= A_T \cdot A_R \, J_0(\alpha) \cos 2\pi f_0 \sigma$$
$$- A_T \cdot A_R \, 2J_1(\alpha) \sin\left(2\pi f_0 \sigma\right) \cdot \cos\left(2\pi f_m (t - \frac{\sigma}{2}) - \varphi_{m0}\right)$$
$$\pm ... \qquad (7),$$

wobei $\alpha$ ein empfangsseitiger Modulationsindex ist:

$$\alpha = 2\eta \sin\left(\pi f_m \sigma\right) \qquad (8).$$

Aus der Formel (7) ist ersichtlich, dass grundsätzlich durch die beschriebene Mischung der Signale und Filterung bezüglich der Grundfrequenz $f_0$ der Laufzeitunterschied $\sigma$ und damit die Kolbenposition I bestimmbar ist. Es gilt $\sigma=2l/c$ mit der Phasengeschwindigkeit c im Unterraum 26.

Wenn das oben genannte Mischungssignal $s_M$ mit einem die Frequenzmodulation erzeugenden Signal $s_{mod}$ gemischt wird, dann ergibt sich ein Signal $s_G$ zu

$$s_G(t) = s_{mod}(t) \otimes s_M(t)$$
$$= A_T \cdot A_R \, A_{mod} \sin\left(2\pi f_0 \sigma\right) J_1(\alpha) \cos\left(\pi f_m \sigma\right) + ... \qquad (9).$$

Man erkennt, dass, wenn eine Frequenzfilterung bei der Hauptseitenband-Frequenz $f_m$ durchgeführt wird, auch über das Seitenband der Laufzeitunterschied und damit die Kolbenposition bestimmbar ist. Grundsätzlich lässt sich dieses Verfahren auch für höhere Seitenbänder mit einem Vielfachen der Modulationsfrequenz durchführen, wobei die Signalstärke bei dem ersten Seitenband mit der Hauptfrequenz $f_m$ am größten ist.

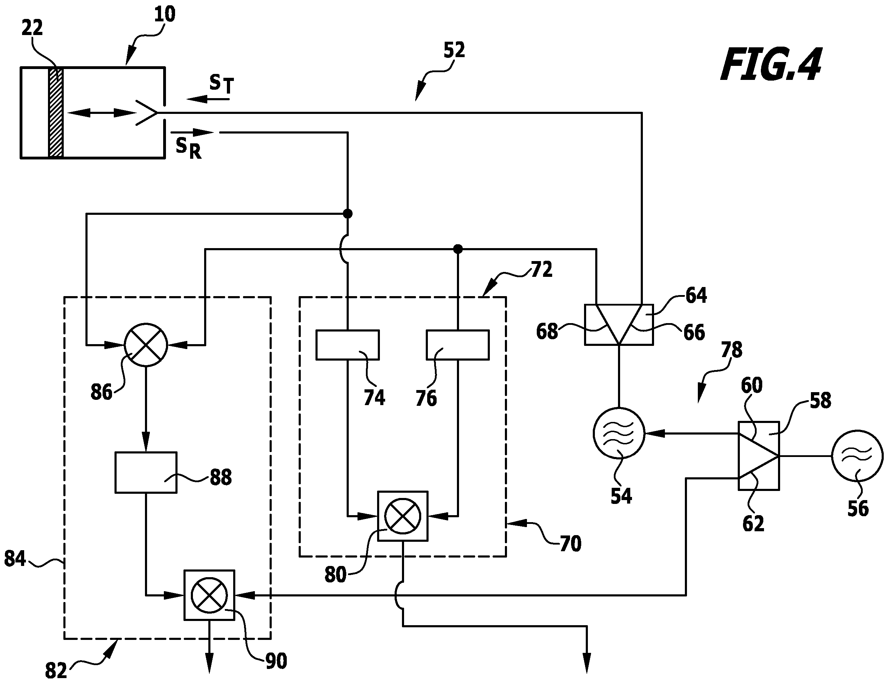

Ein erstes Ausführungsbeispiel einer erfindungsgemäßen Vorrichtung, welche in Figur 4 schematisch gezeigt und dort mit 52 bezeichnet ist, umfasst einen Oszillator 54, welcher Mikrowellenstrahlung der Grundfrequenz $f_0$ erzeugt. An diesen Oszillator 54 ist ein weiterer Oszillator 56 gekoppelt, welcher für die Frequenzmodulation mit der Frequenz $f_m$ sorgt. Der Oszillator 56 ist dabei über einen Leistungsteiler 58 an den Oszillator 54 gekoppelt. Der Leistungsteiler 58 umfasst einen ersten Zweig 60 und einen zweiten Zweig 62. Die Kopplung des Oszillators 56 an den Oszillator 54 zur Erzeugung des Signals $s_T$ erfolgt über den ersten Zweig 60.

Dem Oszillator 54 ist ein Leistungsteiler 64 nachgeordnet, welcher ebenfalls einen ersten Zweig 66 und einen zweiten Zweig 68 umfasst. Der erste Zweig 66 ist an die Antenne 32 gekoppelt. Über den ersten Zweig 66 wird ein Sendesignal an den Kolbenzylinder 10 gesandt und dort von der Antenne 32 in den ersten Unterraum 26 emittiert.

Der zweite Zweig 68 dient zur Bereitstellung eines Auswertungs-Sendesignals, welches zur Auswertung herangezogen wird und exakt die gleichen Charakteristiken einschließlich Phasenlage wie das emittierte Sendesignal aufweist.

Die Vorrichtung 52 weist eine erste Einheit 70 auf, welche zur Phasenbestimmung der Phase zwischen den Sendesignalen und Empfangssignalen dient.

Die erste Einheit 70 umfasst eine Filtereinrichtung 72 mit einem ersten Filter 74 und einem zweiten Filter 76.

Der erste Filter ist an einen Eingangsanschluss und damit direkt an die Antenne 32 gekoppelt. Empfangssignale von dem Kolbenzylinder 10 gehen direkt zu dem ersten Filter 74. Der zweite Filter 76 ist über den zweiten Zweig 68 an eine Mikrowellen-Sendeeinrichtung 78 gekoppelt, wobei die Mikrowellen-Sendeeinrichtung die Oszillatoren 54 und 56 umfasst.

Die Filter 74, 76 der Filtereinrichtung 72 sind beispielsweise durch SAW-Filter gebildet. Diese weisen bei relativ geringen Kosten und geringen Baugrößen steile Filtercharakteristika auf.

Der erste Filter 74 und der zweite Filter 76 sind jeweils Bandpassfilter, welche auf das Grundband mit der Frequenz $f_0$ ausgelegt sind und diese Frequenz und einen engen Bereich um diese Frequenz durchlassen.

Der erste Filter 74 und der zweite Filter 76 führen eine Filterung bezüglich des Grundbands mit der Grundfrequenz $f_0$ durch.

Ausgangsseitig sind der erste Filter 74 und der zweite Filter 76 an einen Mischer 80 gekoppelt. Der Mischer 80 mischt die vom Filter 74 und 76 stammenden frequenzgefilterten Signale. Es wird dadurch das Signal gemäß Formel (7) erzeugt, ohne Anteil bei den Seitenbändern. Dadurch wird der Phasenunterschied bzw. der Laufzeitunterschied zwischen Sendesignal und Empfangssignal beim Grundband mit der Frequenz $f_0$ ermittelt und direkt bestimmt.

Aus diesem Laufzeitunterschied wiederum lässt sich die Kolbenposition bestimmen.

Es wird ein Signal erhalten (siehe Formel (7)), welches ein Gleichspannungssignal ist und im Bereich zwischen der Position I = 0 (bei der der Kolben 22 am Übergang 44 anliegt) und der halben Wellenlänge im Zylinder bzw. periodischen Wiederholungen diese Bereichs eindeutig ist.

Die Vorrichtung 52 umfasst ferner eine zweite Einheit 82 zur Phasenbestimmung der Phase zwischen Sendesignalen und Empfangsphasen an einem oder mehreren Seitenbändern. Die zweite Einheit 82 und die erste Einheit 70 sind Teil einer Mikrowellen-Empfangseinrichtung 84.

Die zweite Einheit 82 weist einen ersten Mischer 86 auf. Dieser weist einen ersten Eingang auf, in den Empfangssignale $s_R$ einkoppelbar sind. Ferner weist er einen zweiten Eingang auf, welcher an den zweiten Zweig 68 des Leistungsteilers 64 gekoppelt ist. An dem ersten Mischer 86 wird eine Mischung gemäß Formel (7) durchgeführt und das Signal $s_M$ erzeugt.

Dem Mischer nachfolgend ist eine Filtereinrichtung 88 mit einem Bandpassfilter angeordnet, welche selektiv auf eines oder mehrere Seitenbänder ist. Bei einem bevorzugten Ausführungsbeispiel ist die Filtereinrichtung 88 selektiv auf die Frequenz $f_m$, d. h. es wird diese Hauptfrequenz des ersten Seitenbands (siehe Formel (7)) durchgelassen mit einer engen Bandbreite. Grundsätzlich ist es möglich, dass alternativ oder zusätzlich höhere Seitenbänder durchgelassen werden, jedoch ist bei höheren Seitenbändern die Signalstärke verringert, so dass das erste Seitenband bevorzugt ist.

Die zweite Einheit 82 umfasst ferner einen zweiten Mischer 90, welcher der Filtereinrichtung 88 nachgeschaltet ist. Das durch die Filtereinrichtung 88 gefilterte Signal wird diesem zweiten Mischer 90 zugeführt. Ferner ist der zweite Mischer 90 an den Oszillator 56 über den zweiten Zweig des Leistungsteilers 58 gekoppelt. In dem zweiten Mischer 90 findet eine Mischung des von dem ersten Mischer 86 stammenden, durch die Filtereinrichtung 88 gefilterten Signals und des die Modulation des Sendesignals erzeugenden Signals statt.

Es ergibt sich dann ein Gleichspannungssignal (siehe Formel (9)), das eindeutig ist in einem Messbereich zwischen Null und $c/f_m$, wobei c die Phasengeschwindigkeit im ersten Unterraum 26 ist.

Dieser Eindeutigkeitsbereich ist größer als der Eindeutigkeitsbereich der ersten Einheit 70; dort ist der Eindeutigkeitsbereich bestimmt durch $c/f_0$.

Die zweite Einheit 82 kann deshalb zu einer Grobmessung verwendet werden, um die Position zu finden und die erste Einheit 70 kann zu einer Feinmessung der Position verwendet werden.

Aus der Formel (9) ist erkennbar, dass der in dieser Formel enthaltene Koeffizient sinus $(2\pi f_0\sigma)$ für bestimmte Werte von $\sigma$ Null werden kann. Wenn die Amplitude Null ist, ist eine Phasenmessung nicht mehr möglich.

Abhilfe kann hier geschaffen werden, wenn der zweite Mischer 90 als Quadraturmischer ausgebildet ist. Dann ergeben sich nach Mischung des die Modulation erzeugenden Signals:

$$s_{GI}(t) = A_I \cdot \sin\left(2\pi f_0\sigma\right) J_1(\alpha)\cos\left(\pi f_m\sigma\right)$$

und $\hspace{8cm}$ (10)

$$s_{GQ}(t) = A_Q \cdot \cos\left(2\pi f_0\sigma\right) J_1(\alpha)\cos\left(\pi f_m\sigma\right)$$

Wenn das Signal $s_{GI}$ wegen des Faktors $\sin(2\pi f_0\sigma)$ Null ist oder sehr klein ist,
kann das Signal $s_{GQ}$ ausgewertet werden, welches in diesem Fall maximal ist.

Wenn das Signal $s_{GQ}$ wegen des Faktors $\cos(2\pi f_0 \sigma)$ Null ist oder sehr klein ist, kann das Signal $s_{GI}$ ausgewertet werden, welches in diesem Fall maximal ist.

Der oben erwähnte Nachteil ist dann nicht mehr vorhanden.

Der erste Unterraum 26 als Wellenleiter weist eine bestimmte cut-off-Frequenz $\lambda_c$ auf. Die Vakuumwellenlänge ist $\lambda_0 = c_0/f_0$ mit $c_0$ als Phasengeschwindigkeit im Vakuum.

Um eine möglichst hohe Messgenauigkeit zu erreichen, sollte die Modulationsfrequenz möglichst hoch sein. Um eine eindeutige Messung durchführen zu können, darf die Laufzeit $\sigma$ die Periodendauer $T_m$ der Modulationsfrequenz jedoch nicht überschreiten.

Dadurch ergibt sich die Bedingung

$$f_m \leq \frac{c_0}{l_{max}\ \sqrt{\varepsilon_R\ \mu_R}}\ \frac{1}{\sqrt{1-(\lambda_0/\lambda_c)^2}} \qquad (11)$$

für die maximale Modulationsfrequenz. $l_{max}$ ist dabei der maximale Kolbenhub, $\varepsilon_R$ ist die Dielektrizitätszahl des Mediums im ersten Unterraum 26 und $\mu_R$ ist die entsprechende magnetische Permeabilitätszahl.

Wenn beispielsweise von einer Dielektrizitätszahl $\varepsilon_R$ = 2,2 ausgegangen wird (dies ein typischer Wert für Hydrauliköl), von $\mu_R$ = 1, von einem maximalen Kolbenhub von 2 m und einem Verhältnis der Wellenlänge im Vakuum zur cut-off-Wellenlänge von 0,82, dann ergibt sich als obere Grenze für die Modulationsfrequenz $f_m$ ca. 170 MHz.

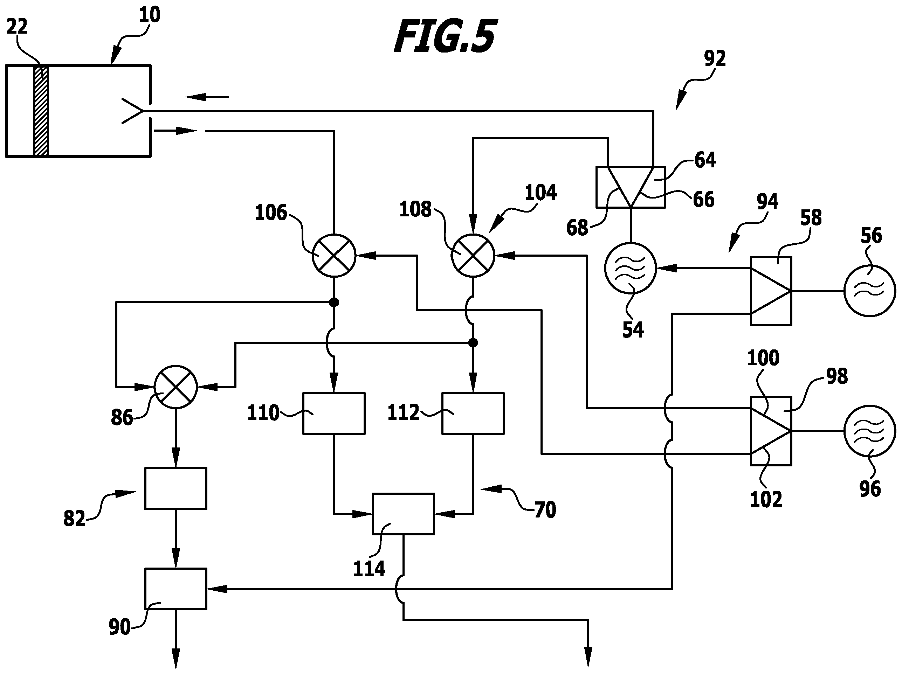

Ein zweites Ausführungsbeispiel einer erfindungsgemäßen Vorrichtung, welches in Figur 5 schematisch gezeigt und dort mit 92 bezeichnet ist, umfasst eine Mikrowellen-Sendeeinrichtung 94 mit einem ersten Oszillator 54 und einem zweiten Oszillator 56. Es sind entsprechende Leistungsteiler 58 und 64 vorgesehen. Der Aufbau ist hier grundsätzlich gleich wie anhand der Vorrichtung 52 beschrieben und es werden deshalb auch gleiche Bezugzeichen verwendet.

Es ist ein dritter Oszillator 96 vorgesehen, welcher frequenzstabile Zwischenfrequenzsignale bereitstellt. Die Zwischenfrequenz liegt unterhalb der Frequenz des ersten Oszillators 54.

Dem dritten Oszillator 96 ist ein Leistungsteiler 98 mit einem ersten Zweig 100 und einem zweiten Zweig 102 nachgeschaltet.

Die Vorrichtung umfasst eine als Ganzes mit 104 bezeichnete Mischungseinrichtung mit einem ersten Mischer 106 und einem zweiten Mischer 108. Der erste Mischer 106 ist über den zweiten Zweig 102 an den Oszillator 96 gekoppelt. Ferner führt ein Empfangssignal an einen Eingang des Mischers 106. In dem Mischer 106 werden Empfangssignale und Zwischenfrequenzsignale gemischt. Dadurch werden Empfangssignale auf die Zwischenfrequenz heruntergemischt.

Ein Eingang des zweiten Mischers 108 ist über den zweiten Zweig 68 an den ersten Oszillator 54 gekoppelt. Dadurch werden dem zweiten Mischer 108 Auswertungs-Sendesignale, welche Sendesignalen entsprechen, bereitgestellt.

Über den ersten Zweig 100 des Leistungsteilers 98 ist ein weiterer Eingang des zweiten Mischers 108 an den Oszillator 96 gekoppelt.

In dem zweiten Mischer 108 werden Auswertungs-Sendesignale und Zwischenfrequenzsignale gemischt und dadurch werden Auswertungs-Sendesignale erzeugt, welche auf die Zwischenfrequenz heruntergesetzt sind.

Ausgänge der Mischungseinrichtung 104 mit ihren Mischern 106 und 108 sind an eine erste Einheit und eine zweite Einheit gekoppelt. Diese sind grundsätzlich gleich ausgebildet wie die oben im Zusammenhang mit der Vorrichtung 52 beschriebene erste Einheit 70 und zweite Einheit 82. Es werden dabei grundsätzlich die gleichen Bezugzeichen verwendet.

Die erste Einheit 70 umfasst dabei Filter 110, 112, welche Bandpassfilter für die Zwischenfrequenz sind.

Ein Phasendetektor 114 ermittelt dann die Phasendifferenz zwischen den entsprechenden auf die Zwischenfrequenz herabgesetzten Signalen. Aus der dann ermittelten Phasendifferenz kann wiederum für die Feinmessung die Kolbenposition bestimmt werden.

Ansonsten funktioniert die Vorrichtung 92 wie oben anhand der Vorrichtung 52 beschrieben.

Durch das Herabsetzen auf die Zwischenfrequenz, wobei ein typischer Wert der Zwischenfrequenz bei 800 MHz liegt, lässt sich unter Umständen die Auswertung vereinfachen, da geeignete Elektronikkomponenten verwendbar sind.

Die Vorrichtung 52 arbeitet nach dem Homodyn-Prinzip.

Die Vorrichtung 92 arbeitet nach dem Heterodyn-Prinzip.

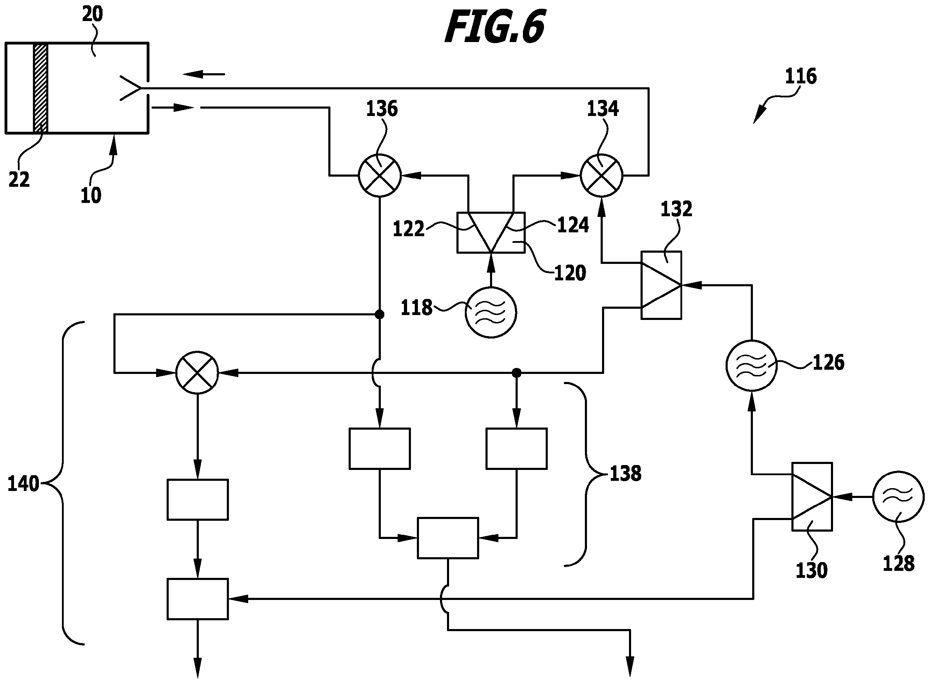

Ein weiteres Ausführungsbeispiel einer erfindungsgemäßen Vorrichtung, welches in Figur 6 gezeigt und dort mit 116 bezeichnet ist, umfasst einen ersten Oszillator 118. Dieser stellt eine feste Frequenz bereit, welche die Grundfrequenz $f_0$ abzüglich einer Zwischenfrequenz $f_i$ ist. Diesem ersten Oszillator 118 ist ein Leistungsteiler 120 mit einem ersten Zweig 122 und einem zweiten Zweig 124 nachgeschaltet.

Ferner ist ein zweiter Oszillator 126 vorgesehen, welcher Zwischenfrequenzsignale mit der Zwischenfrequenz $f_i$ erzeugt. An diesen zweiten Oszillator ist ein dritter Oszillator 128 gekoppelt, welcher die Zwischenfrequenzsignale frequenzmoduliert mit der Modulationsfrequenz $f_m$. Die Kopplung erfolgt dabei über einen Leistungsteiler 130. Die mit der Modulationsfrequenz frequenzmodulierten Zwischenfrequenzsignale werden über einen Leistungsteiler 132 zu einem Mischer 134 geführt. An einem weiteren Eingang dieses Mischers 134 stehen die Signale des ersten Oszillators 118 an. Dieser Mischer 134 erzeugt Sendesignale mit der Grundfrequenz $f_0$, welche in den Zylinderraum 20 des Kolbenzylinders 10 emittiert werden.

An einem Empfangsstrang der Vorrichtung 116 ist ein weiterer Mischer 136 angeordnet, welcher eingangsseitig Empfangssignale enthält und einem weiteren Eingang Signale des ersten Oszillators 118 enthält. In diesem Mischer 136 werden also Empfangssignale und Signale der Frequenz $f_0 - f_i$ gemischt.

Es ist eine erste Einheit 138 vorgesehen, welche am Grundband die Phasendifferenz zwischen Sendesignalen und Empfangssignalen bestimmt. Ferner ist eine zweite Einheit 140 vorhanden, welche an einem Seitenband die Phasendifferenz zwischen Sendesignalen und Empfangssignalen bestimmt.

Die erste Einheit 138 enthält als Eingangssignale Auswertungs-Empfangssignale, welche von dem Mischer 136 bereitgestellt werden. Ferner enthält die erste Einheit 138 eingangsseitig frequenzmodulierte Zwischenfrequenzsignale über den Leistungsteiler 132.

An der ersten Einheit 138 erfolgt dann wie oben beschrieben für Auswertungs-Empfangssignale und für die über den Leistungsteiler 132 bereitgestellten Signale jeweils eine Bandpassfilterung bezüglich der Zwischenfrequenz.

Die zweite Einheit 140 ist eingangsseitig an den Mischer 136 gekoppelt, welcher die Auswertungs-Empfangssignale bereitstellt. Ferner ist sie eingangsseitig an den Leistungsteiler 132 gekoppelt. Es erfolgt eine Mischung der genannten Signale und eine Bandpassfilterung bezüglich der Modulationsfrequenz $f_m$ und eine Mischung mit dem die Modulation mit der Frequenz $f_m$ erzeugten Signalen.

Der erste Oszillator 118 ist nicht moduliert und damit leicht anpassungsfähig. Über Einstellung seiner Frequenz ist eine einfache Anpassung an einen zu vermessenden Kolbenzylinder mit vorgegebener Zylindergeometrie auf einfache Weise möglich.

Die Vorrichtung 116 arbeitet ebenfalls nach dem Heterodyn-Prinzip. Die Mischer 134 und 136 erhalten dabei über den ersten Oszillator 118 Signale der festen Frequenz $f_0 - f_i$. Das modulierte Zwischenfrequenzsignal wird in den Mischer 134 eingekoppelt, welcher das Sendesignal erzeugt.

Ansonsten funktioniert die Vorrichtung 116 wie oben beschrieben.

Aus den ermittelten Phaseninformationen lässt sich dann die Position I des Kolbens 22 in dem Kolbenzylinder 10 bestimmen. Ein eventuell auftretender Linearitätsfehler kann durch ein Linearisierungsverfahren kompensiert werden. Beispielsweise wird dazu eine Nachschlagetabelle verwendet.

Für die Erfassung der Phasen bei der Grobbestimmung und Feinbestimmung, insbesondere wenn nach dem Heterodyn-Prinzip gearbeitet wird, werden Phasendetektoren eingesetzt. Es ist insbesondere vorgesehen, dass Ausgangsspannungen dieser Phasendetektoren auf einen Simultan-A/D-Wandler geführt werden, um gleichmäßig alle Informationen zu erfassen, auch wenn der Kolben 22 bewegt wird.

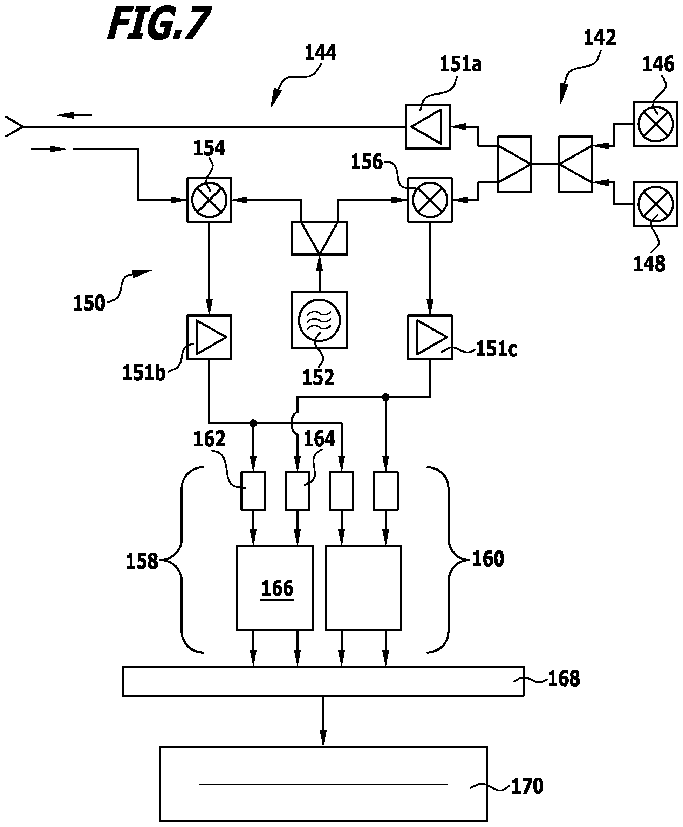

Ein weiteres Ausführungsbeispiel einer erfindungsgemäßen Vorrichtung, welches in Figur 7 schematisch gezeigt und dort mit 142 bezeichnet ist, umfasst eine Mikrowellen-Sendeeinrichtung 144, welche Mikrowellenstrahlung in den Kolbenzylinder 10 einkoppelt. Die Mikrowellen-Sendeeinrichtung 144 umfasst dabei einen ersten Oszillator 146 und einen zweiten Oszillator 148. Der erste Oszillator 146 stellt ein Signal einer Grundfrequenz $f_0^1$ bereit. Der zweite Oszillator 148 stellt ein Signal einer Grundfrequenz $f_0^2$ bereit. Die Frequenzen $f_0^1$ und $f_0^2$ unterscheiden sich voneinander.

Der erste Oszillator 146 und der zweite Oszillator 148 sind parallel zueinander angeordnet. Die Signale mit der Frequenz $f_0^1$ und $f_0^2$ werden gleichzeitig ausgesandt und der Zylinderraum 12 wird gleichzeitig mit diesen Signalen beaufschlagt, wobei diese insbesondere in einem Isolations-Verstärker 151a verstärkt wurden.

Bei einer Ausführungsform ist eine zusätzliche Frequenzmodulation wie oben beschrieben vorgesehen. In diesem Fall sind dann die Oszillatoren 146 und 148 durch entsprechende Einheiten ersetzt, welche jeweils frequenzmodulierte Sendesignale mit Grundfrequenzen $f_0^1$ und $f_0^2$ bereitstellen. Es ist dabei grundsätzlich vorteilhaft, wenn dann die Modulationsfrequenzen der beiden Einheiten ebenfalls unterschiedlich sind, um diese Signale trennen zu können.

Die Vorrichtung 142 umfasst eine Mikrowellen-Empfangseinrichtung 150. Die Mikrowellen-Empfangseinrichtung 150 weist dabei einen dritten Oszillator 152 auf, welcher Zwischenfrequenzsignale bereitstellt. Es ist ferner ein erster Mischer 154 vorgesehen, welcher eingangsseitig Empfangssignale empfängt und an einem weiteren Eingang die Zwischenfrequenzsignale empfängt. An dem ersten Mischer 154 werden Empfangssignale auf die Zwischenfrequenz herabgesetzt und diese Signale werden in einem Isolations-Verstärker 151b verstärkt. Es ist ferner ein zweiter Mischer 156 vorhanden. Dieser zweite Mischer 156 empfängt Auswertungs-Sendesignale, welche von Sendesignalen abgezweigt sind und identisch mit den Sendesignalen bezüglich der entsprechenden Charakteristiken sind. Der zweite Mischer 156 empfängt ferner Zwischenfrequenzsignale. Er erzeugt dadurch Auswertungs-Sendesignale, welche auf die Zwischenfrequenz herabgesetzt sind. Diese Signale werden in einem Isolations-Verstärker 151c verstärkt.

Die Vorrichtung 142 umfasst ferner eine erste Einheit 158 und eine zweite Einheit 160, welche die Phase zwischen Sendesignalen und Empfangssignalen ermitteln und grundsätzlich gleich ausgebildet sind. Die erste Einheit ist der Frequenz $f_0^1$ zugeordnet und die zweite Einheit ist der Frequenz $f_0^2$ zugeordnet.

Die erste Einheit 158 umfasst eine Filtereinrichtung mit einem ersten Filter 162 und einem zweiten Filter 164. In einen Eingang des ersten Filters 162 führen Auswertungs-Empfangssignale, welche durch den ersten Mischer 154 erzeugt wurden. In einen Eingang des zweiten Filters 164 führen Auswertungs-Sendesignale, welche an dem zweiten Mischer 156 erzeugt wurden.

Der erste Filter 162 und der zweite Filter 164 sind jeweils Bandpassfilter, welche Frequenzen in einem Bereich um die Zwischenfrequenz durchlassen.

Dem ersten Filter 162 und dem zweiten Filter 164 nachgeschaltet ist ein Phasendetektor 166. Dieser ermittelt die Phasenlage zwischen den Auswertungs-Sendesignalen und Auswertungs-Empfangssignalen und damit zwischen den Sendesignalen und Empfangssignalen für die Frequenz $f_0^1$.

Signale des Phasendetektors 166 werden einer Auswertungseinrichtung 168 bereitgestellt.

Wie oben erwähnt ist die zweite Einheit 160 gleich ausgebildet, wobei sie die entsprechenden Messungen für die Frequenz $f_0^2$ durchführt.

Der Auswertungseinrichtung 168 ist eine Berechnungseinheit 170 zugeordnet, welche die gemessenen Daten auswertet.

Es ist auch möglich, die Signale mit den beiden Grundfrequenzen nicht gleichzeitig in den Kolbenzylinder einzuspeisen, sondern zeitlich abwechselnd. Dazu können die Signale der Oszillatoren 146 und 148 durch einen Umschalter abwechselnd zugeschaltet werden.

In einem Rundleiter (zylindrischer Hohlraum) beträgt die Phasenverschiebung aufgrund der Signallaufzeit

$$\varphi_0 = \frac{4\pi\, l}{\lambda_0}\ \sqrt{\varepsilon_R\ \mu_R \left(1 - \frac{\lambda_0^{\,2}}{\lambda_c^{\,2}}\right)} \qquad\qquad (12)$$

Dabei ist $\lambda_0 = c_0/f_0$ die Wellenlänge in Luft, $\varepsilon_R$ die Dielektrizitätszahl, $\mu_R$ die magnetische Permeabilität und $\lambda_c$ die cut-off-Wellenlänge des entsprechenden hohlzylindrischen Hohlraums.

Die cut-off-Wellenlänge $\lambda_c$ ist dabei frequenzabhängig und hängt von dem Radius $r_i$ des Zylinderraums 20 ab. Die Dielektrizitätszahl $\varepsilon_R$ ist in dem relevanten Frequenzbereich höchstens geringfügig frequenzabhängig.

Wenn die Phase oder Laufzeit $\sigma$ für mindestens zwei unterschiedliche Frequenzen bei gleicher Kolbenposition bestimmt wird, dann kann daraus die Kolbenposition I (Länge des zylindrischen Hohlraums) ohne Kenntnis der Dielektrizitätszahl bestimmt werden. Entsprechend lässt sich bei bekanntem $r_i$ die Dielektrizitätszahl berechnen. Siehe dazu Formel (12); diese Gleichung lässt sich nach $\varepsilon_R$ auflösen. Wenn dies für (mindestens) zwei Grundfrequenzen gemacht wird, dann ergibt sich eine Gleichung, in die $\varepsilon_R$ nicht mehr eingeht und welche die Berechnung der Kolbenposition erlaubt. Wenn die Kolbenposition bekannt ist und der Radius bekannt ist, dann lässt sich die Dielektrizitätszahl aus (12) berechnen.

Es ist dadurch möglich, wenn die Dielektrizitätszahl nicht genau bekannt ist, diese zu bestimmen. Insbesondere lässt sich auch eine zeitliche Veränderung der Dielektrizitätszahl beispielsweise eines Hydrauliköls überwachen. Eine solche zeitliche Änderung kann beispielsweise aufgrund von Alterungsprozessen, Verschmutzung, Temperatureinfluss, Druckeinfluss oder dergleichen erfolgen.

Es ist dann eine Bestimmung der Dielektrizitätszahl unabhängig von der Messung der Kolbenposition möglich und auch während des laufenden Betriebs möglich.

Bei einer Ausführungsform zur Bestimmung der Dielektrizitätszahl werden definierte Phasen für unterschiedliche Frequenzen vorgegeben. Beispielsweise wird eine erste Frequenz $f_0$ so gewählt, dass die Phase Null ist (modulo $2\pi$) und eine zweite Frequenz $f_0$ wird so gewählt, dass die Phase auch Null (modulo $2\pi$) ist, aber mit einem unterschiedlichen Faktor. Beispielsweise ist die Phase für die erste Frequenz $f_0$ n x $2\pi$ und die Phase für die zweite Frequenz $f_0$ ist (n +1) x $2\pi$. Aus Gleichung (12) lässt sich dann auf einfache Weise $\varepsilon_R$ bestimmen.

Falls die Kolbenposition I bekannt ist, kann auch der Innenradius $r_i$ des Zylinderraums 20 berechnet werden.

Diese Lösung lässt sich auch durchführen, wenn, wie im Zusammenhang mit den Vorrichtungen 52, 92 und 116 erwähnt, frequenzmodulierte Sendesignale verwendet werden.

Wenn für Sendesignale mit unterschiedlichen Frequenzen die gleiche Amplitude verwendet wird, dann lässt sich beispielsweise durch Verhältnisbildung auch ein von den Amplituden unabhängiges Verhältnis erreichen (siehe die Gleichungen (7), (9) und (10)).

**Bezugszeichenliste**

| 10 | Kolbenzylinder |
|---|---|
| 12 | Zylinder |
| 14 | erste Stirnseite |
| 16 | zweite Stirnseite |
| 18 | Wandung |
| 20 | Zylinderraum |
| 22 | Kolben |
| 24 | Kolbenstange |
| 26 | erster Unterraum |
| 28 | zweiter Unterraum |
| 30a | erste Einlass-/Auslass-Kombination |
| 30b | zweite Einlass-/Auslass-Kombination |
| 32 | Antenne |
| 34 | Vorrichtung |
| 36 | Anschluss |
| 38 | Aufnahmeraum |
| 40 | erster Bereich |
| 42 | zweiter Bereich |
| 44 | Übergang |
| 46 | Vorderseite |
| 48 | Richtkoppler |
| 50 | Koaxialkabeleinrichtung |
| 52 | Vorrichtung (erstes Ausführungsbeispiel) |
| 54 | Oszillator |
| 56 | Oszillator |
| 58 | Leistungsteiler |
| 60 | erster Zweig |
| 62 | zweiter Zweig |
| 64 | Leistungsteiler |
| 66 | erster Zweig |
| 68 | zweiter Zweig |
| 70 | erste Einheit |
| 72 | Filtereinrichtung |
| 74 | erster Filter |
| 76 | zweiter Filter |
| 78 | Mikrowellen-Sendeeinrichtung |
| 80 | Mischer |
| 82 | zweite Einheit |
| 84 | Mikrowellen-Empfangseinrichtung |
| 86 | erster Mischer |
| 88 | Filtereinrichtung |
| 90 | zweiter Mischer |
| 92 | Vorrichtung (zweites Ausführungsbeispiel) |
| 94 | Mikrowellen-Sendeeinrichtung |
| 96 | dritter Oszillator |
| 98 | Leistungsteiler |
| 100 | erster Zweig |
| 102 | zweiter Zweig |
| 104 | Mischungseinrichtung |
| 106 | erster Mischer |
| 108 | zweiter Mischer |
| 110 | Filter |
| 112 | Filter |
| 114 | Phasendetektor |

| | |
|---|---|
| 116 | Vorrichtung (drittes Ausführungsbeispiel) |
| 118 | erster Oszillator |
| 120 | Leistungsteiler |
| 122 | erster Zweig |
| 124 | zweiter Zweig |
| 126 | zweiter Oszillator |
| 128 | dritter Oszillator |
| 130 | Leistungsteiler |
| 132 | Leistungsteiler |
| 134 | Mischer |
| 136 | Mischer |
| 138 | erste Einheit |
| 140 | zweite Einheit |
| 142 | Vorrichtung (viertes Ausführungsbeispiel) |
| 144 | Mikrowellen-Sendeeinrichtung |
| 146 | erster Oszillator |
| 148 | zweiter Oszillator |
| 150 | Mikrowellen-Empfangseinrichtung |
| 151a,b,c | Verstärker |
| 152 | dritter Oszillator |
| 154 | erster Mischer |
| 156 | zweiter Mischer |
| 158 | erste Einheit |
| 160 | zweite Einheit |
| 162 | erster Filter |
| 164 | zweiter Filter |
| 166 | Phasendetektor |
| 168 | Auswertungseinrichtung |
| 170 | Berechnungseinheit |

**Patentansprüche**

1. Verfahren zur Ermittlung der Position eines Kolbens eines Kolbenzylinders, bei dem ein Mikrowellen-Sendesignal in Richtung des Kolbens emittiert wird und vom Kolben reflektierte Mikrowellen detektiert werden, wobei das Sendesignal ein moduliertes Signal umfasst, welches eine mit einer Modulationsfrequenz sinusförmig modulierte Grundfrequenz hat, und eine Auswertung der Phase zwischen Sendesignalen und Empfangssignalen durchgeführt wird, **dadurch gekennzeichnet, dass** eine Phasenbestimmung bei dem Grundband und eine simultane Phasenbestimmung an mindestens einem Seitenband durchgeführt wird, wobei die Phasenbestimmung am Grundband für eine Feinbestimmung der Kolbenposition genutzt wird und die Phasenbestimmung an dem mindestens einen Seitenband für die Grobbestimmung der Kolbenposition genutzt wird, und dass an Empfangssignalen und Auswertungs-Sendesignalen eine Bandpassfilterung bezüglich der Grundfrequenz oder einer Zwischenfrequenz durchgeführt wird, und eine Bandpassfilterung bezüglich der Modulationsfrequenz erfolgt.

2. Verfahren nach Anspruch 1, **dadurch gekennzeichnet, dass** eine Auswertung der Laufzeit zwischen Sendesignalen und Empfangssignalen durchgeführt wird.

3. Verfahren nach Anspruch 1 oder 2, **dadurch gekennzeichnet, dass** die Phase des modulierten Signals die Gestalt

$$\varphi_T = 2\pi\, f_0 t + \eta\, \sin\left(2\pi f_m t - \varphi_{m0}\right)$$

hat, wobei $f_0$ die Grundfrequenz ist, $f_m$ die Modulationsfrequenz ist, $\eta$ ein Modulationsindex ist und $\varphi_{m0}$ eine Konstante ist, und insbesondere, dass die Phase des Empfangssignals die Gestalt

$$\varphi_R = 2\pi\, f_0\, (t - \sigma) + \eta\, \sin\left(2\pi\, f_m\, (t - \sigma) - \varphi_{m0}\right)$$

hat mit dem Laufzeitunterschied σ.

4.  Verfahren nach einem der vorangehenden Ansprüche, **dadurch gekennzeichnet, dass** Sendesignale oder Auswertungs-Sendesignale mit Zwischenfrequenzsignalen gemischt werden oder sind, und insbesondere, dass die Zwischenfrequenzsignale mit der Modulationsfrequenz moduliert sind, und/oder dass Auswertungs-Sendesignale und Auswertungs-Empfangssignale jeweils mit Zwischenfrequenzsignalen gemischt werden.

5.  Verfahren nach Anspruch 4, **dadurch gekennzeichnet, dass** eine Zwischenfrequenz kleiner als die Grundfrequenz ist, und insbesondere, dass die Grundfrequenz im Gigahertzbereich liegt und die Zwischenfrequenz im Megahertzbereich liegt, und insbesondere, dass die Zwischenfrequenz zwischen der Modulationsfrequenz und der Grundfrequenz liegt.

6.  Verfahren nach einem der vorangehenden Ansprüche, **dadurch gekennzeichnet, dass** die gefilterten Signale, an welchen die Bandpassfilterung bezüglich der Grundfrequenz oder der Zwischenfrequenz durchgeführt wurde, gemischt werden und/oder die Phasendifferenz zwischen den gefilterten Signalen bestimmt wird.

7.  Verfahren nach einem der vorangehenden Ansprüche, **dadurch gekennzeichnet, dass** Auswertungs-Sendesignale und Empfangssignale gemischt werden, und insbesondere, dass Mischungssignale bezüglich einer Hauptfrequenz des mindestens einen Seitenbands bandpassgefiltert werden, und insbesondere, dass Signale nach der Filterung mit weiteren Signalen gemischt werden, wobei die weiteren Signale die Frequenzmodulation mit der Modulationsfrequenz ($f_m$) erzeugen.

8.  Verfahren nach einem der vorangehenden Ansprüche, **dadurch gekennzeichnet, dass** Sendesignale erzeugt werden durch Mischung von Signalen mit der Grundfrequenz und Zwischenfrequenzsignalen, und insbesondere, dass die Zwischenfrequenzsignale selber mit der Modulationsfrequenz moduliert sind, und insbesondere, dass Auswertungs-Empfangssignale durch Mischen von Empfangssignalen und Signalen mit der Grundfrequenz erzeugt werden, und insbesondere, dass Auswertungs-Empfangssignale und modulierte Zwischenfrequenzsignale gemischt werden und die entstehenden Signale nach Filterung mit Signalen, welche die Modulation mit der Modulationsfrequenz bewirken, gemischt werden.

9.  Verfahren nach einem der vorangehenden Ansprüche, **dadurch gekennzeichnet, dass** Sendesignale bei mindestens zwei unterschiedlichen Grundfrequenzen emittiert werden und Phasenbestimmungen jeweils bei diesen mindestens zwei unterschiedlichen Grundfrequenzen durchgeführt werden, und insbesondere, dass die Dielektrizitätszahl mittels Phasenbestimmungen bei den mindestens zwei unterschiedlichen Grundfrequenzen ermittelt wird.

10. Vorrichtung zur Messung der Position eines Kolbens (22) eines Kolbenzylinders (10), umfassend eine Mikrowellen-Sendeeinrichtung (78; 94) und eine Mikrowellen-Empfangseinrichtung (84), welche im Gebrauch mindestens teilweise an dem Kolbenzylinder (10) angeordnet sind, wobei die Mikrowellen-Sendeeinrichtung (78; 94) derart ausgebildet ist, dass sie im Gebrauch Sendesignale in Richtung des Kolbens (22) emittiert und die Mikrowellen-Empfangseinrichtung (84) derart ausgebildet ist, dass sie im Gebrauch Empfangssignale empfängt und detektiert, und umfassend eine Auswertungseinrichtung, **dadurch gekennzeichnet, dass** die Mikrowellen-Sendeeinrichtung (78; 94) derart ausgebildet ist, dass sie im Gebrauch frequenzmodulierte Signale erzeugt, welche eine mit einer Modulationsfrequenz ($f_m$) sinusförmig modulierte Grundfrequenz ($f_0$) haben, dass eine erste Einheit (70; 138) vorgesehen ist, welche derart ausgebildet ist, dass sie im Gebrauch eine Phasenbestimmung der Phase zwischen Sendesignalen und Empfangssignalen an dem Grundband durchführt, dass eine zweite Einheit (82; 140) vorgesehen ist, welche derart ausgebildet ist, dass sie im Gebrauch eine simultane Phasenbestimmung an mindestens einem Seitenband durchführt, dass die erste Einheit (70; 138) eine Filtereinrichtung (72) umfasst, welche derart ausgebildet ist, dass sie im Gebrauch eine Filterung bezüglich der Grundfrequenz ($f_0$) oder einer Zwischenfrequenz durchführt, dass die zweite Einheit (82) eine Filtereinrichtung (88) umfasst, welche derart ausgebildet ist, dass sie im Gebrauch eine Filterung bezüglich der Modulationsfrequenz ($f_m$) durchführt, und dass eine Grobbestimmung der Kolbenposition durch die Phasenbestimmung an dem mindestens einen Seitenband und eine Feinbestimmung der Kolbenposition durch die Phasenbestimmung an dem Grundband erfolgt.

11. Vorrichtung nach Anspruch 10, **dadurch gekennzeichnet, dass** die erste Einheit (70) einen Mischer aufweist, welcher derart ausgebildet ist, dass er im Gebrauch gefilterte Sendesignale und Empfangssignale mischt und/oder einen Phasendetektor (114) zur Phasenbestimmung aufweist.

12. Vorrichtung nach Anspruch 10 oder 11, **dadurch gekennzeichnet, dass** die zweite Einheit (82) einen ersten Mischer (86) umfasst, der derart ausgebildet ist, dass an diesem im Gebrauch Empfangssignale oder Auswertungs-Empfangssignale und Sendesignale oder Auswertungs-Sendesignale gemischt werden, und insbesondere, dass die zweite Einheit (82) einen zweiten Mischer (90) umfasst, welcher derart ausgebildet ist, dass er im Gebrauch Signale des ersten Mischers (86) nach Filterung mit die Frequenzmodulation erzeugenden Signalen mischt, und/oder dass die zweite Einheit (82) einen Phasendetektor umfasst, welcher derart ausgebildet ist, dass er im Gebrauch die Phasendifferenz von Mischungssignalen zu die Modulation erzeugenden Signalen ermittelt.

13. Vorrichtung nach einem der Ansprüche 10 bis 12, **gekennzeichnet durch** eine Mischungseinrichtung (104), welche derart ausgebildet ist, dass sie im Gebrauch Empfangssignale und Auswertungs-Sendesignale mit Zwischenfrequenzsignalen mischt, und/oder **gekennzeichnet durch** eine Mischungseinrichtung (134, 136), welche derart ausgebildet ist, dass sie im Gebrauch Signale mit einer Ausgangsfrequenz, welche die Differenz zwischen der Grundfrequenz ($f_0$) und einer Zwischenfrequenz ($f_i$) ist, mit mit der Modulationsfrequenz ($f_m$) modulierten Zwischenfrequenzsignalen mischt, wobei die entstehenden Mischungssignale Sendesignale sind, und welche Empfangssignale mit den Signalen mit der Ausgangsfrequenz ($f_0 - f_i$) mischt.

14. Vorrichtung nach einem der Ansprüche 10 bis 13, **dadurch gekennzeichnet, dass** die Mikrowellen-Sendeeinrichtung (144) derart ausgebildet ist, dass sie im Gebrauch Sendesignale mindestens einer ersten Grundfrequenz ($f_0{}^1$) und einer zweiten Grundfrequenz ($f_0{}^2$) sendet, wobei sich die erste Grundfrequenz ($f_0{}^1$) von der zweiten Grundfrequenz ($f_0{}^2$) unterscheidet.

15. Vorrichtung nach einem der Ansprüche 10 bis 14, **dadurch gekennzeichnet, dass** eine Antenne (32) an einem ersten Bereich (40) eines Zylinderraums (20) angeordnet ist, welcher einen kleineren Durchmesser als ein zweiter Bereich (42) aufweist, in welchem sich der Kolben (22) bewegt, und insbesondere, dass eine dem Kolben (22) zugewandte Seite (46) der Antenne (32) bezüglich eines Übergangs (44) zwischen dem ersten Bereich (40) und dem zweiten Bereich (42) zurückgesetzt ist, und/oder dass eine Antenne (32) in einem Zylinderraum (20) so angeordnet ist, dass sie zusammen mit einem Aufnahmeraum (38) für die Antenne (32) eine Fortsetzung eines Koaxialkabels (50) ist, und/oder dass eine Antenne (32) in einem ringzylindrischen Unterraum (28) oder hohlzylindrischen Unterraum (26) des Kolbenzylinders (10) angeordnet ist.

## Claims

1. Method for determining the position of a piston of a piston cylinder, in which a microwave transmission signal is emitted in the direction of the piston and microwaves reflected by the piston are detected, wherein the transmission signal comprises a modulated signal which has a base frequency sinusoidally modulated with a modulation frequency, and an evaluation of the phase between transmission signals and receive signals is performed, **characterized in that** a phase determination is performed on the base band and a simultaneous phase determination is performed on at least one sideband, wherein the phase determination on the base band is used for a fine determination of the piston position and the phase determination on the at least one sideband is used for the coarse determination of the piston position, and **in that** a bandpass filtering with respect to the base frequency or an intermediate frequency is performed on receive signals and evaluation transmission signals, and a bandpass filtering with respect to the modulation frequency takes place.

2. Method in accordance with Claim 1, **characterized in that** an evaluation of the transit time between transmission signals and receive signals is performed.

3. Method in accordance with Claim 1 or 2, **characterized in that** the phase of the modulated signal has the form

$$\varphi_T = 2\pi f_0 t + \eta \sin\left(2\pi f_m t - \varphi_{m0}\right)$$

wherein $f_0$ is the base frequency, $f_m$ is the modulation frequency, $\eta$ is a modulation index, and $\varphi_{m0}$ is a constant, and in particular **in that** the phase of the receive signal has the form

$$\varphi_R = 2\pi f_0 \left(t - \sigma\right) + \eta \sin\left(2\pi f_m \left(t - \sigma\right) - \varphi_{m0}\right)$$

with the transit time difference σ.

4. Method in accordance with any one of the preceding Claims, **characterized in that** the transmission signals or evaluation transmission signals become mixed or are mixed with intermediate frequency signals, and in particular **in that** the intermediate frequency signals are modulated with the modulation frequency, and/or **in that** evaluation transmission signals and evaluation receive signals are each mixed with intermediate frequency signals.

5. Method in accordance with Claim 4, **characterized in that** an intermediate frequency is less than the base frequency, and in particular **in that** the base frequency is in the gigahertz range and the intermediate frequency is in the megahertz range, and in particular **in that** the intermediate frequency is between the modulation frequency and the base frequency.

6. Method in accordance with any one of the preceding Claims, **characterized in that** the filtered signals on which the bandpass filtering with respect to the base frequency or the intermediate frequency was performed are mixed and/or the phase difference between the filtered signals is determined.

7. Method in accordance with any one of the preceding Claims, **characterized in that** evaluation transmission signals and receive signals are mixed, and in particular **in that** mixture signals are bandpass-filtered with respect to a main frequency of the at least one sideband, and in particular **in that** signals are mixed with further signals after filtering, wherein the further signals produce the frequency modulation with the modulation frequency ($f_m$).

8. Method in accordance with any one of the preceding Claims, **characterized in that** transmission signals are generated by mixing signals with the base frequency and intermediate frequency signals, and in particular **in that** the intermediate frequency signals themselves are modulated with the modulation frequency, and in particular **in that** evaluation receive signals are produced by mixing receive signals and signals at the base frequency, and in particular **in that** evaluation receive signals and modulated intermediate frequency signals are mixed and the resulting signals are mixed, after filtering, with signals which bring about the modulation with the modulation frequency.

9. Method in accordance with any one of the preceding Claims, **characterized in that** transmission signals are emitted at at least two different base frequencies and respective phase determinations are performed at said at least two different base frequencies, and in particular **in that** the dielectric constant is determined by means of phase determinations at the at least two different base frequencies.

10. Apparatus for measuring the position of a piston (22) of a piston cylinder (10), comprising a microwave transmission device (78; 94) and a microwave receiving device (84) which, during use, are arranged at least partially on the piston cylinder (10), wherein the microwave transmission device (78; 94) is configured in such a way that, during use, it emits transmission signals in the direction of the piston (22), and the microwave receiving device (84) is configured in such a way that, during use, it receives and detects receive signals, and comprising an evaluation device, **characterized in that** the microwave transmission device (78; 94) is configured in such a way that, during use, it produces frequency-modulated signals which have a base frequency ($f_0$) sinusoidally modulated with a modulation frequency ($f_m$), **in that** a first unit (70; 138) is provided which is configured in such a way that, during use, it performs a phase determination of the phase between transmission signals and receive signals on the base band, **in that** a second unit (82; 140) is provided which is configured in such a way that, during use, it performs a simultaneous phase determination on at least one sideband, **in that** the first unit (70; 138) comprises a filter device (72) which is configured in such a way that, during use, it performs a filtering with respect to the base frequency ($f_0$) or an intermediate frequency, **in that** the second unit (82) comprises a filter device (88) which is configured in such a way that, during use, it performs a filtering with respect to the modulation frequency ($f_m$), and **in that** a coarse determination of the piston position is made by means of the phase determination on the at least one sideband and a fine determination of the piston position is made by means of the phase determination on the base band.

11. Apparatus in accordance with Claim 10, **characterized in that** the first unit (70) has a mixer, which is configured in such a way that, during use, it mixes filtered transmission signals and receive signals, and/or has a phase detector (114) for phase determination.

12. Apparatus in accordance with Claim 10 or 11, **characterized in that** the second unit (82) comprises a first mixer (86) which is configured in such a way that, during use, receive signals or evaluation receive signals and transmission signals or evaluation transmission signals are mixed at said mixer (86), and in particular **in that** the second unit (82) comprises a second mixer (90) which is configured in such a way that, during use, it mixes signals of the first mixer (86), after filtering, with signals generating the frequency modulation, and/or **in that** the second unit (82) comprises a phase detector which is configured in such a way that, during use, it determines the phase difference of mixture signals to signals generating the modulation.

13. Apparatus in accordance with any one of Claims 10 to 12, **characterized by** a mixing device (104) which is configured in such a way that, during use, it mixes receive signals and evaluation transmission signals with intermediate frequency signals, and/or **characterized by** a mixing device (134, 136) which is configured in such a way that, during use, it mixes signals at an initial frequency, which is the difference between the base frequency ($f_0$) and an intermediate frequency ($f_i$), with intermediate frequency signals modulated with the modulation frequency ($f_m$), wherein the resulting mixture signals are transmission signals, and which mixes receive signals with the signals at the initial frequency ($f_0 - f_i$).

14. Apparatus in accordance with any one of Claims 10 to 13, **characterized in that** the microwave transmission device (144) is configured in such a way that, during use, it transmits transmission signals of at least one first base frequency ($f_0{}^1$) and one second base frequency ($f_0{}^2$), wherein the first base frequency ($f_0{}^1$) differs from the second base frequency ($f_0{}^2$).

15. Apparatus in accordance with any one of Claims 10 to 14, **characterized in that** an antenna (32) is arranged at a first region (40) of a cylinder space (20), said region (40) having a smaller diameter than a second region (42) in which the piston (22) moves, and in particular **in that** a side (46) of the antenna (32) facing toward the piston (22) is set back in relation to a transition (44) between the first region (40) and the second region (42), and/or **in that** an antenna (32) is arranged in a cylinder space (20) such that, together with a receiving space (38) for the antenna (32), it forms a continuation of a coaxial cable (50), and/or **in that** an antenna (32) is arranged in an annular cylindrical subspace (28) or hollow cylindrical subspace (26) of the piston cylinder (10).

**Revendications**

1. Procédé de détection de la position d'un piston d'un vérin à piston, dans lequel un signal d'émission de micro-ondes est émis en direction du piston et des micro-ondes réfléchies par le piston sont détectées, dans lequel le signal d'émission comprend un signal modulé, lequel a une fréquence de base modulée de manière sinusoïdale avec une fréquence de modulation, et une évaluation de la phase entre des signaux d'émission et des signaux de réception est effectuée, **caractérisé en ce qu'**une détermination de phase pour la bande de base et une détermination de phase simultanée au niveau d'au moins une bande latérale sont effectuées, dans lequel la détermination de phase au niveau de la bande de base est utilisée pour une détermination précise de la position de piston et la détermination de phase au niveau de l'au moins une bande latérale est utilisée pour la détermination grossière de la position de piston, et qu'un filtrage passe-bande par rapport à la fréquence de base ou à une fréquence intermédiaire est effectué au niveau de signaux de réception et de signaux d'émission d'évaluation, et un filtrage passe-bande a lieu par rapport à la fréquence de modulation.

2. Procédé selon la revendication 1, **caractérisé en ce qu'**une évaluation de la durée entre des signaux d'émission et des signaux de réception est effectuée.

3. Procédé selon la revendication 1 ou 2, **caractérisé en ce que** la phase du signal modulé a la forme

$$\varphi_T = 2\pi\, f_0 t + \eta \sin\left(2\pi f_m t - \varphi_{m0}\right)$$

dans lequel $f_0$ est la fréquence de base, $f_m$ est la fréquence de modulation, $\eta$ est un indice de modulation et $\varphi_{m0}$ est une constante, et en particulier, que la phase du signal de réception a la forme

$$\varphi_R = 2\pi\, f_0\left(t - \sigma\right) + \eta \sin\left(2\pi\, f_m\left(t - \sigma\right) - \varphi_{m0}\right)$$

avec la différence de durée $\sigma$.

4. Procédé selon l'une quelconque des revendications précédentes, **caractérisé en ce que** des signaux d'émission ou des signaux d'émission d'évaluation sont mélangés avec des signaux de fréquence intermédiaire, et en particulier, que les signaux de fréquence intermédiaire sont modulés avec la fréquence de modulation, et/ou que des signaux d'émission d'évaluation et des signaux de réception d'évaluation sont mélangés respectivement avec des signaux de fréquence intermédiaire.

5. Procédé selon la revendication 4, **caractérisé en ce qu'**une fréquence intermédiaire est inférieure à la fréquence de base, et en particulier, que la fréquence de base se trouve dans la plage des gigahertz et la fréquence intermédiaire se trouve dans la plage des mégahertz, et en particulier, que la fréquence intermédiaire se trouve entre la fréquence de modulation et la fréquence de base.

6. Procédé selon l'une quelconque des revendications précédentes, **caractérisé en ce que** les signaux filtrés, au niveau desquels le filtrage passe-bande par rapport à la fréquence de base ou à la fréquence intermédiaire a été effectué, sont mélangés et/ou la différence de phase entre les signaux filtrés est déterminée.

7. Procédé selon l'une quelconque des revendications précédentes, **caractérisé en ce que** des signaux d'émission d'évaluation et des signaux de réception sont mélangés, et en particulier, que des signaux de mélange sont filtrés par passe-bande par rapport à une fréquence principale de l'au moins une bande latérale, et en particulier, que des signaux sont mélangés après le filtrage avec d'autres signaux, dans lequel les autres signaux génèrent la modulation de fréquence avec la fréquence de modulation ($f_m$).

8. Procédé selon l'une quelconque des revendications précédentes, **caractérisé en ce que** des signaux d'émission sont générés par mélange de signaux avec la fréquence de base et de signaux de fréquence intermédiaire, et en particulier, que les signaux de fréquence intermédiaire sont modulés eux-mêmes avec la fréquence de modulation, et en particulier, que des signaux de réception d'évaluation sont générés par mélange de signaux de réception et de signaux avec la fréquence de base, et en particulier, que des signaux de réception d'évaluation et des signaux de fréquence intermédiaire modulés sont mélangés et les signaux résultants sont mélangés après filtrage avec des signaux, lesquels entraînent la modulation avec la fréquence de modulation.

9. Procédé selon l'une quelconque des revendications précédentes, **caractérisé en ce que** des signaux d'émission sont émis pour au moins deux fréquences de base différentes et des déterminations de phase sont effectuées respectivement pour ces au moins deux fréquences de base différentes, et en particulier, que la constante diélectrique est détectée au moyen de déterminations de phase pour les au moins deux fréquences de base différentes.

10. Dispositif de mesure de la position d'un piston (22) d'un vérin à piston (10), comprenant un dispositif d'émission de micro-ondes (78 ; 94) et un dispositif de réception de micro-ondes (84), lesquels sont agencés en utilisation au moins en partie au niveau du vérin à piston (10), dans lequel le dispositif d'émission de micro-ondes (78 ; 94) est réalisé de sorte qu'il émet en utilisation des signaux d'émission en direction du piston (22) et le dispositif de réception de micro-ondes (84) est réalisé de sorte qu'il reçoit et détecte en utilisation des signaux de réception, et comprenant un dispositif d'évaluation, **caractérisé en ce que** le dispositif d'émission de micro-ondes (78 ; 94) est réalisé de sorte qu'il génère en utilisation des signaux modulés en fréquence, lesquels ont une fréquence de base ($f_0$) modulée de manière sinusoïdale avec une fréquence de modulation ($f_m$), qu'une première unité (70 ; 138) est prévue, laquelle est réalisée de sorte qu'elle effectue en utilisation une détermination de phase de la phase entre des signaux d'émission et des signaux de réception au niveau de la bande de base, qu'une deuxième unité (82 ; 140) est prévue, laquelle est réalisée de sorte qu'elle effectue en utilisation une détermination de phase simultanée au niveau d'au moins une bande latérale, que la première unité (70 ; 138) comprend un dispositif de filtrage (72), lequel est réalisé de sorte qu'il effectue en utilisation un filtrage par rapport à la fréquence de base ($f_0$) ou à une fréquence intermédiaire, que la deuxième unité (82) comprend un dispositif de filtrage (88), lequel est réalisé de sorte qu'il effectue en utilisation un filtrage par rapport à la fréquence de modulation ($f_m$), et qu'une détermination grossière de la position de piston par la détermination de phase au niveau de l'au moins une bande latérale et une détermination précise de la position de piston par la détermination de phase au niveau de la bande de base ont lieu.

11. Dispositif selon la revendication 10, **caractérisé en ce que** la première unité (70) présente un mélangeur, lequel est réalisé de sorte qu'il mélange en utilisation des signaux d'émission et des signaux de réception filtrés et/ou présente un détecteur de phase (114) pour la détermination de phase.

12. Dispositif selon la revendication 10 ou 11, **caractérisé en ce que** la deuxième unité (82) comprend un premier mélangeur (86), qui est réalisé de sorte qu'en utilisation des signaux de réception ou des signaux de réception d'évaluation et des signaux d'émission ou des signaux d'émission d'évaluation sont mélangés au niveau de celui-ci, et en particulier, que la deuxième unité (82) comprend un deuxième mélangeur (90), lequel est réalisé de sorte qu'il mélange en utilisation des signaux du premier mélangeur (86) après filtrage avec des signaux générant la modulation de fréquence, et/ou que la deuxième unité (82) comprend un détecteur de phase, lequel est réalisé de sorte qu'il détecte en utilisation la différence de phase de signaux de mélange par rapport à des signaux générant la modulation.

13. Dispositif selon l'une quelconque des revendications 10 à 12, **caractérisé par** un dispositif de mélange (104), lequel est réalisé de sorte qu'il mélange en utilisation des signaux de réception et des signaux d'émission d'évaluation avec des signaux de fréquence intermédiaire, et/ou **caractérisé par** un dispositif de mélange (134, 136), lequel est réalisé de sorte qu'il mélange en utilisation des signaux avec une fréquence de sortie, laquelle est la différence entre la fréquence de base ($f_0$) et une fréquence intermédiaire ($f_i$), avec des signaux de fréquence intermédiaire modulés avec la fréquence de modulation ($f_m$), dans lequel les signaux de mélange résultants sont des signaux d'émission, et lequel mélange des signaux de réception avec les signaux avec la fréquence de sortie ($f_0$-$f_i$).

14. Dispositif selon l'une quelconque des revendications 10 à 13, **caractérisé en ce que** le dispositif d'émission de micro-ondes (144) est réalisé de sorte qu'il émet en utilisation des signaux d'émission d'au moins une première fréquence de base ($f_0^1$) et d'une deuxième fréquence de base ($f_0^2$), dans lequel la première fréquence de base ($f_0^1$) se distingue de la deuxième fréquence de base ($f_0^2$).

15. Dispositif selon l'une quelconque des revendications 10 à 14, **caractérisé en ce qu'**une antenne (32) est agencée au niveau d'une première zone (40) d'un espace de vérin (20), laquelle présente un plus petit diamètre qu'une deuxième zone (42), dans laquelle le piston (22) se déplace, et en particulier, qu'un côté (46) de l'antenne (32) tourné vers le piston (22) est reculé par rapport à une transition (44) entre la première zone (40) et la deuxième zone (42) et/ou qu'une antenne (32) est agencée dans un espace de vérin (20) de sorte qu'elle est, conjointement avec un espace de réception (38) pour l'antenne (32), un prolongement d'un câble coaxial (50), et/ou qu'une antenne (32) est agencée dans un sous-espace cylindrique annulaire (28) ou sous-espace cylindrique creux (26) du vérin à piston (10).

**FIG.1**

EP 2 519 751 B1

# FIG.2

EP 2 519 751 B1

## FIG.3a

## FIG.3b

FIG.4

EP 2 519 751 B1

# FIG.5

EP 2 519 751 B1

FIG.6

# FIG.7

**EP 2 519 751 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 202005020158 U1
- DE 19521771 A1
- DE 102007020046 A1
- DE 19833220 A1
- US 4737705 A
- EP 0303595 B1